# EUROPEAN PATENT SPECIFICATION

(11) **EP 2 822 247 B1**
(45) Date of publication and mention of the grant of the patent: **10.10.2018**
(21) Application number: 14166461.5
(22) Date of filing: 29.04.2014
(51) Int. Cl.: H04L 29/06, H04L 29/08, H04W 28/16

(54) **Integrated signaling between mobile data networks and enterprise networks**
Integrierte Signalisierung zwischen mobilen Datennetzwerken und Unternehmensnetzwerken
Signalisation intégrée entre des réseaux de données mobiles et des réseaux d'entreprise

(30) Priority: 05.07.2013 US 201313935994
(43) Date of publication of application: 07.01.2015
(73) Proprietor: Cisco Technology, Inc., San Jose, CA 95134-1706 (US)
(72) Inventor: Shatzkamer, Kevin D., Hingham, MA 02043 (US); Ang, Gibson Soon Teck, Westford, MA 01886 (US); Alex, Arun C., Nashua, NH 03062 (US); Sanderson, Craig Robert, Union City, CA 94587 (US); Clough, David T., Hingham, MA 02043 (US)
(74) Representative: Hibbert, Juliet Jane Grace

(56) References cited:
- EP-A1- 2 299 675
- EP-A2- 2 299 647

## Description

### TECHNICAL FIELD

This disclosure relates in general to the field of communications and, more particularly, to providing for integrated signaling between mobile data networks and enterprise networks.

### BACKGROUND

The phenomenal growth of mobile networking is presenting mobile operators with tremendous opportunities along with corresponding challenges as they race to add capacity and services to meet accelerating demands. Mobile operators worldwide are seeing tremendous growth in mobile data subscriptions and bandwidth usage. The emergence of free, "over-the-top" and offnet applications and services (such as those from Skype, gaming vendors, and applications stores is impacting the return on investment (ROI) of mobile operators. Consumers can utilize these applications and services, which use the operator's network, without providing even an incremental usage fee to the mobile operator. While operators benefit in the near term with new subscriptions, long term there are profitability challenges from the explosion of data traffic. To take advantage of the mobile Internet explosion, mobile operators must add value to third party service transactions. This value can be extracted in terms of new revenue and profit. Without this value add, mobile operators risk becoming simply a bandwidth "bit pipe" provider. As a result, it is critical for mobile operators to invest strategically in their network assets allowing them to launch new services and go beyond flat-rate data plans. In current networks, various pieces of information like location of a subscriber and the reachability of a subscriber etc distributed in various network elements throughout the network and there is no single entity in the network, which can aggregate the information present in the different network elements, correlate the information, and feed that information to various external entities.

EP-A2-2,299,647 describes mechanisms for sharing user information across communication networks, in particular across networks separated by one or more Session Border Controllers.

EP-A1-2,299,675 describes a network framework associating non-enterprise phones with enterprise users.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified block diagram showing a high level architecture of a communication system for orchestrating mobile networks in accordance with one embodiment of the present disclosure;
FIGURE 2 is a simplified block diagram showing an embodiment of a hierarchical architectural framework of a communication system for orchestrating mobile networks in accordance with another embodiment of the present disclosure;
FIGURE 3 is a simplified flow diagram of an embodiment of workflow coordination operations performed by a orchestration/work flow engine;
FIGURE 4 illustrates an embodiment of the protocol translation platform of the orchestration/work flow engine;
FIGURE 5 is a simplified flow diagram of an embodiment of subscriber identity normalization operations performed by the orchestration/work flow engine;
FIGURE 6 is a simplified flow diagram of another embodiment of workflow coordination operations performed by the orchestration/work flow engine;
FIGURE 7 is a simplified diagram of an embodiment of a call flow of a network, service, subscriber abstraction, orchestration module;
FIGURE 8 is a simplified block diagram illustrating a particular embodiment of a server of the communication system of FIGURE 2;
FIGURE 9 is a simplified block diagram of an embodiment of a communication system for providing integrated signaling between a mobile data network and enterprise networks;
FIGURE 10 is a simplified flow diagram of an embodiment of signaling between an mobile network and an enterprise network for a quality-of-service (QoS) request;
FIGURE 11 is a simplified flow diagram of another embodiment of signaling between an mobile network and an enterprise network for a quality-of-service (QoS) request;
FIGURE 12 is a simplified block diagram of another embodiment of a communication system for providing integrated signaling between mobile data network and enterprise networks;
FIGURE 13 is a simplified flow diagram of another embodiment of signaling between a mobile network and an enterprise network; and
FIGURE 14 is a simplified flowchart of another embodiment of signaling between a mobile network and an enterprise network.

### DETAILED DESCRIPTION OF EXAMPLE EMBODIMENTS

### OVERVIEW

Aspects of the invention are set out in the independent claims and preferred features are set out in the dependent claims.

A method is provided in one example and includes receiving a request from a first network element associated with a first network for establishing a first communication session between the first network element to a first user device associated with a second network. The request includes a first user identifier used to identify a first user associated with the first user device within the first network. The method further includes translating the first user identifier to a second user identifier in which the second user identifier is used to identify the first user within the second network. The method still further includes sending a first query including the second user identifier to a second network element, and receiving a first response message including quality of service information indicated by a policy associated with the second user identifier.

In a particular embodiment, the method further includes translating the first response message with the second user identifier to a policy query with the first user identifier.

In a particular embodiment, the method further includes determining a performance quality threshold for the first communication session based upon the quality of service information, and establishing the first communication session between the first network element and the first user device. In another particular embodiment, the method further includes receiving performance data including at least one performance metric indicating a quality of delivery of content to the first user device by the first communication session.

In still another particular embodiment, the method further includes determining whether at least one performance metric exceeds the performance quality threshold. In another particular embodiment, the method further includes determining whether the quality of delivery is to be improved for the first user when it is determined that the at least one performance metric exceeds the performance quality threshold. In still another particular embodiment, the method still further includes increasing a first quality of service value for the first communication session if it is determined that the quality of delivery is to be improved for the first user. In still another particular embodiment, the method still further includes decreasing a second quality of service value for a second session associated with a second user device if it is determined that the quality of delivery is to be improved for the first user.

In another particular embodiment, the first network is a mobile network. In still another particular embodiment, the second network is an enterprise network. In still another particular embodiment, the first network element includes a policy and charging rules function (PCRF). In still another particular embodiment, the second network element is an application server for providing one or more applications or services to first user equipment.

In a further example, there is provided logic encoded in one or more non-transitory tangible media or a computer program or computer program product that includes code for execution and when executed by a processor is operable to perform operations including receiving a request from a first network element associated with a first network for establishing a first communication session between the first network element to a first user device associated with a second network. The request includes a first user identifier used to identify a first user associated with the first user device within the first network. The operations further include translating the first user identifier to a second user identifier, the second user identifier used to identify the first user within the second network. The operations further include sending a first query including the second user identifier to a second network element and receiving a first response message including quality of service information indicated by a policy associated with the second user identifier.

In a particular embodiment, the operations further include translating the first response message with the second user identifier to a policy query with the first user identifier.

In a particular embodiment, the operations further include determining a performance quality threshold for the first communication session based upon the quality of service information and establishing the first communication session between the first network element and the first user device.

In another particular embodiment, the operations further include receiving performance data including at least one performance metric indicating a quality of delivery of content to the first user device by the first communication session.

In still another particular embodiment, the operations further include determining whether the at least one performance metric exceeds the performance quality threshold. In another particular embodiment, the operations further include determining whether the quality of delivery is to be improved for the first user when it is determined that the at least one performance metric exceeds the performance quality threshold. In still another particular embodiment, the operations further include increasing a first quality of service value for the first communication session if it is determined that the quality of delivery is to be improved for the first user. In still another particular embodiment, the operations further include decreasing a second quality of service value for a second session associated with a second user device if it is determined that the quality of delivery is to be improved for the first user.

In another particular embodiment, the first network is a mobile network. In still another particular embodiment, the second network is an enterprise network. In still another particular embodiment, the first network element includes a policy and charging rules function (PCRF). In still another particular embodiment, the second network element is an application server for providing one or more applications or services to first user equipment.

An apparatus is provided in a further embodiment and includes a memory element configured to store data, a processor operable to execute instructions associated with the data, and at least one module. The at least one module is configured to receive a request from a first network element associated with a first network for establishing a first communication session between the first network element to a first user device associated with a second network, the request including a first user identifier used to identify a first user associated with the first user device within the first network. The module further translates the first user identifier to a second user identifier, the second user identifier used to identify the first user within the second network, sends a first query including the second user identifier to a second network element and receives a first response message including quality of service information indicated by a policy associated with the second user identifier.

In a particular embodiment, the at least one module is further configured to translate the first response message with the second user identifier to a policy query with the first user identifier.

In a particular embodiment, the at least one module is further configured to determine a performance quality threshold for the first communication session based upon the quality of service information and establish the first communication session between the first network element and the first user device. In another particular embodiment, the at least one module is further configured to receive performance data including at least one performance metric indicating a quality of delivery of content to the first user device by the first communication session.

In still another particular embodiment, the at least one module is further configured to determine whether the at least one performance metric exceeds the performance quality threshold. In another particular embodiment, the at least one module is further configured to determine whether the quality of delivery is to be improved for the first user when it is determined that the at least one performance metric exceeds the performance quality threshold. In still another particular embodiment, the at least one module is further configured to increase a first quality of service value for the first communication session if it is determined that the quality of delivery is to be improved for the first user. In still another particular embodiment, the at least one module is further configured to decrease a second quality of service value for a second session associated with a second user device if it is determined that the quality of delivery is to be improved for the first user.

In another particular embodiment, the first network is a mobile network. In still another particular embodiment, the second network is an enterprise network. In still another particular embodiment, the first network element includes a policy and charging rules function (PCRF). In still another particular embodiment, the second network element is an application server for providing one or more applications or services to first user equipment.

### EXAMPLE EMBODIMENTS

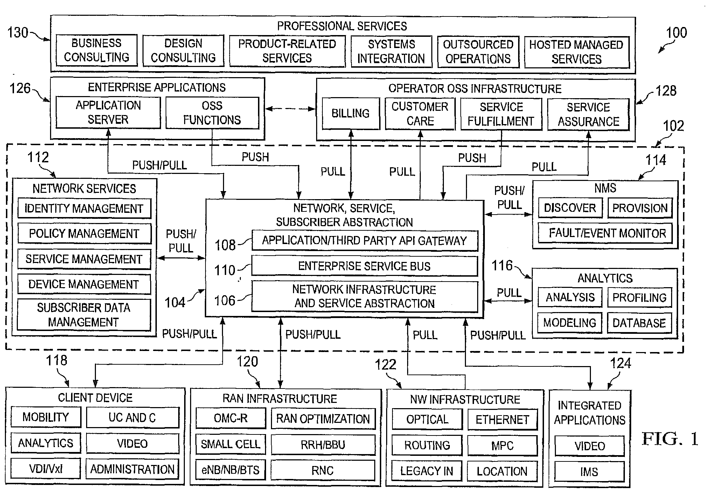

Referring now to FIGURE 1, FIGURE 1 is a simplified block diagram showing a high-level architecture of a communication system 100 for orchestrating mobile networks in accordance with one embodiment of the present disclosure. Communication system 100 includes a server 102 including a network, service, and subscriber abstraction module 104. The network, service, and subscriber abstraction module 104 includes a network infrastructure and service abstraction layer 106, an application/3rd party application programming interface (API) gateway 108, and enterprise service BUS 110. Server 102 further includes a network services layer 112, a network management system (NMS) 114, and analytics module 116.

Communication system 100 provides for a monetization architecture for mobile networks. Issues facing service providers today includes creating services targeted for both the enterprise and consumer markets in a rapid fashion, dynamically optimizing the network to drive efficiencies, and enabling a third party application developer eco-system to easily leverage the power of the network. One or more embodiments of the architecture described herein address these issues. Various embodiments allow a mobile service provider, fixed line provider and/or large enterprise to create a platform which exposes network capabilities and allows application developers and walled gardened applications developers to leverage the power of the network, allowing service providers to monetize the capabilities of the network by optimizing the infrastructure and then creating a service framework that allows service providers to quickly and efficiently create new service offers. Various embodiments provide an architecture to integrate with the existing capabilities that the service provider provides while avoiding "rip and replace" scenarios and ensuring faster time to market.

Network services layer 112 provides for the management of network services within communication system 100. In a particular embodiment, network services layer 112 may provide one or more of identity management, service management, policy management, device management, and subscriber data management. Identity management enables a service provider to manage subscribers across all applications, device types, and access types. In a mobile context, the Identity management functions may reside within one or more of a home location register (HLR), home subscriber server (HSS), and authentication, authorization, and accounting (AAA) server. Service management enables a service provider to manage services/application charging/rating functions across all access types, device types, and subscribers. In mobile a mobile context, the service management functions may reside in one or more of an online charging system (OCS) and an offline charging system (OFCS). Device management enables a service provider to manage device behavior when interacting with different access and applications. In a mobile context, the device management functions may reside in a Open Mobile Alliance device management (OMA-DM) function and Access network discovery and selection function (ANDSF), but may in other embodiments also extend into operator-specific implementations that allow modification of device parameters, security parameters, application interaction, etc.

Policy management enables a service provider to define rules based on various input parameters from identity/service/device management functions, network functions, analytics functions, coupled with internally-defined rules (e.g., time-of-day, promotional), to determine how a specific service for a specific subscriber, on a specific device, at a specific instant (e.g., real-time), when connected to a specific network is to be treated. In a mobile context, the policy management functions may reside live in a policy and charging rules function (PCRF). Subscriber data management enables a service provider to deliver real-time services that reflect individual preferences of subscriber. Subscriber data management may encompass the overarching service layer management workflow items and underlying an service layer management database that allow for multiple structured or unstructured pieces of information to be stored and aggregated into a holistic "user profile". The subscriber data that is managed may include identity information, authentication information, personalization information, policy settings, and settings for specific services. In a particular embodiment, the subscriber data management includes a Subscriber Profile Repository (SPR).

NMS 114 manages the network elements, also called managed devices, within communication system 100. In a particular embodiment, NMS 114 may include discovery, fault/event monitoring, and provisioning of network elements. Device management may include fault, configuration, accounting, performance, and security management. Management tasks include discovering network inventory, monitoring device health, and status, providing alerts to conditions that impact system performance, and identification of problems, their source, and possible solutions. NMS 114 may further collect device statistics and may maintain an archive of previous network statistics including problems and solutions that were successful in the past. If faults recur, NMS 114 may search the archive for the possible solutions. Analytics module 116 analyzes network traffic received by server 104 in real-time and provides for a view of network use within communication system 100. Analytics module 116 may include analysis, profiling, modeling, and database functions.

In accordance with one or more embodiments, network, service, and subscriber abstraction module 104 is configured to collect information or data from various network elements within communication system 100 and abstract the data by examining one or more correlating factors between collected data such as an Internet Protocol (IP) address or mobile subscriber identifier, combine the correlating data together based upon the correlating factors into a consistent store of data which can be later accessed and utilized. As a result, network, service, and subscriber abstraction module 104 creates structured data from unstructured data. Network, service, and subscriber abstraction module 104 is configured in at least one embodiment to collect data from one or more of network services layer 112, NMS 114, and analytics module 116 for abstraction and storage. The abstraction function provides a stateless communications plane for service aggregation and protocol conversion. The abstraction function is stateless but in various embodiments, the database is not stateless. In one or more embodiments, the collection of data may be an active-pull in which network, service, and subscriber abstraction module 104 is pulling information from a particular network element. In other embodiments, the collection of data may be an active-push in which a network element is pushing specific information to network, service, and subscriber abstraction module 104 on configured thresholds or time windows. In still other embodiments, network, service, and subscriber abstraction module 104 may collect the data in a passive manner as the data passes through it. The abstraction layer includes a mobile IP network enabler, which provides a service aggregator function. The aggregation function provides for collection and coordination of real-time network, subscriber, application intelligence (such as packet core, probes, and other elements) for service enablement. An API gateway provides a protocol translation function, securely enabling deeper integration with third parties. OSS integration provides billing and settlement integration into existing OSS, as well as 3rd party Service Brokers to provide orchestration workflows.

Server 102 is in communication with a client device 118, a radio access network infrastructure 120, network infrastructure 122, and integrated applications 124 through network infrastructure and service abstraction layer 106. In a particular embodiment, client device 118 may include any mobile client device such as a mobile telephone, a smartphone, or a tablet. In a particular embodiment, client device 118 may include mobility, analytics, virtual desktop infrastructure (VDI)/virtual experience infrastructure (VXI), unified communications and collaboration (UC&C), video, and administration functions. RAN infrastructure 120 include hardware and software configured to implement radio access network functions and may include operations maintenance center radio (OMC-R), small cell, eNB/NB/BTS, RAN optimization, RRH/BBU, and radio network controller (RNC) functions. Network infrastructure 122 includes hardware and software configured to implement wired network infrastructure functions and may include optical, routing, legacy IN, Ethernet, MPC, and location functions. Integrated applications 124 are configured to provide integrated application functions such as multimedia functions to fixed or mobile subscribers. In particular embodiments, the multimedia functions may include video, voice over IP (VOIP), and IP Multimedia Subsystem (IMS).

Network, service, and subscriber abstraction module 104 is further configured in at least one embodiment to collect data from one or more of client device 118, RAN infrastructure 120, network infrastructure 122, and integrated applications 124 for abstraction and storage.

Server 102 is further in communication with enterprise applications 126 via application/3rd party API gateway 108, and operator OSS infrastructure 128 via enterprise service bus 110. Enterprise applications 126 provide third party services and operations support systems (OSS) services to subscribers in the network. In particular embodiments, enterprise applications 126 may include an application server and OSS functions. In one or more embodiments, enterprise applications 126 may provide enterprise applications to communication network 100. In particular embodiments, enterprise applications may include collaboration, video communications, and email services hosted either within or without the enterprise systems. Operator OSS infrastructure 128 supports processes such as maintaining network inventory, provisioning services, configuring network components, managing faults, taking orders, processing bills, and collecting payments. In a particular embodiment operator OSS infrastructure 128 may include billing, customer care, service fulfillment, and service assurance components. The enterprise OSS may include customer care, enterprise service/application fulfillment, employee asset tracking, information security rules, and other enterprise functions. The billing component may include retail billing which enables operators to generate a customer bill based on service plan, usage, promotions, and other OSS interactions, and enabling third parties to leverage operator billing systems for charging a subscriber such as for an in-app purchase that appears on the customer's bill, allowing third party Wi-Fi providers to bill the subscriber, or service delivery platform interaction (e.g., ringtone download). The billing component may also differentiate enterprise data usage (that is relevant to work tasks) from consumer data usage (that is relevant to personal tasks) from the same device with the same subscriber identity. The billing component may also enable an analytical based approach to understanding subscriber billing trends as a means of providing information to an operator that might facilitate service creation, campaign creation, pricing, etc. This may be for a prepaid user or an enterprise shared data plan user, in which case the billing system also manages quota/balance in real-time, converged (across multiple access types) and postpaid.

The customer care component may include customer interaction systems to provide channels for customer self-service, enterprise IT self-service and direct machine-to-customer information, customer relationship management to provide sophisticated marketing, sales and operational support to the service provider agents who interact with the customer, and subscriber management software to support care agents and direct customer interaction. The service fulfillment component may include systems to provide order management systems to orchestrate the steps needed to implement customer orders, handle interdependencies, requests to other content service providers (CSPs), cloud service providers and enterprise platform-as-a-service (PaaS), and manual work orders. The service fulfillment component may further include inventory management systems to track the inventory available to supply services in the network, assign resources, design network connections, and discover network configurations and reconcile them with inventory records. The service fulfillment component may further provide for activation to automatically configure network equipment and network-serving systems to provide a subscriber-requested service, and engineering tools refers to support engineers who plan, design, install and configure networks and services, including planning and design tools, outside plant and geographical information systems, and network installation and configuration tools.

The service assurance component may include service management systems to link customers with their individual services, and enable CSPs to generate granular reports on each customer and service to validate service-level commitments. The service assurance component may further include performance monitoring systems to collect circuit-switched and packet data from the network elements and element management systems supplied by equipment manufacturers and provide reports for operations staff. The service assurance component may further include workforce automation software used to track incidents resulting from service disruption and effectively dispatch field resources, and probe systems rely on dedicated hardware and software agents to collect signaling and media data from the network. In at least one embodiment, the various components of communication system 100 may interoperate to provide professional services 130 including business consulting, design consulting, product-related services, system integration, outsourced operations and hosted management services.

In various embodiments, network, server, and subscriber abstraction module 104 is configured to provide the abstracted information obtained from data sources within communication system 100, such as client device 118, to an information consumer, such as one or more of enterprise applications 126 and operator OSS infrastructure 128, which uses the information to provide some value-added service to subscribers in the network as will be further described herein. In one or more embodiments, the structured/correlated database is what allows "northbound" systems such as enterprise applications 126 and operator OSS infrastructure 128 to function more effectively.

In the particular embodiment illustrated in FIGURE 1, network services layer 112, NMS 114, client device 118, RAN infrastructure 120, integrated applications 124, the application server of enterprise applications 126 have push/pull data connections with network, service, and subscriber abstraction module 104. Further, in the particular embodiment illustrated in FIGURE 1, analytics module 116, network infrastructure 122, the OSS functions of enterprise applications 126, and the component of operator OSS infrastructure 128 have a pull connection with network, service, and subscriber abstraction module 104. In still other embodiments, the one or more components may have push connections, pull connections, or both push and pull connections with any other component.

The phenomenal growth of mobile networking is presenting mobile operators with tremendous opportunities along with corresponding challenges as they race to add capacity and services to meet accelerating demands. Mobile operators worldwide are seeing tremendous growth in mobile data subscriptions and bandwidth usage. The emergence of "over-the-top" and offnet applications and services (such as those from salesforce.com, Skype, gaming vendors, and applications stores is impacting the return on investment (ROI) of mobile operators. Consumers can utilize these applications and services, which use the operator's network, without providing even an incremental usage fee to the mobile operator. While operators benefit in the near term with new subscriptions, long term there are profitability challenges from the explosion of data traffic. To take advantage of the mobile Internet explosion, mobile operators must add value to third party service transactions. This value can be extracted in terms of new revenue and profit. Without this value add, mobile operators risk becoming simply a bandwidth "bit pipe" provider. As a result, it is critical for mobile operators to invest strategically in their network assets allowing them to launch new services and go beyond flat-rate data plans. In current networks, various pieces of information like location of a subscriber and the reachability of a subscriber etc distributed in various network elements throughout the network and there is no single entity in the network, which can aggregate the information present in the different network elements, correlate the information, and feed that information to various external entities.

The current challenges for creating new services may include: Long time to availability - typically twelve to eighteen months to enable services; service silos - building one service doesn't always help build the second service; personalization - each service has unique requirements; no killer application - market conditions vary between operators and regions; and lag in response times - it is difficult to quickly create or modify services in response to market trends. While operators have significant challenges, they also have significant market advantages and unique value. For example, application developers are often clamoring to leverage information only available in the network. Application provider challenges include: restricted or no access to the network; no real time access; lack of desire to understand the operator topology; difficulty in correlating multiple sources/vendors; and lack of standard interfaces to carrier applications/services.

Mobile operators have the opportunity to leverage the key asset in their networks - real-time subscriber, application, and network intelligence - and build an architecture that harvests this intelligence to monetize the network. Various embodiments described herein provide a monetization architecture that increases service velocity, quickly enabling multiple use cases, while providing a platform for application developers to leverage the network. This may provide increased revenue for both the operator and application developers, while enhancing the subscriber experience.

At least one embodiment solves the problem of abstracting out data from different sources and organizing the data into a coherent format that can be translated into one or more external protocols such as Hypertext Transfer Protocol (HTTP), Extensible Messaging and Presence Protocol (XMPP), and Diameter Protocol. Diameter is an authentication, authorization, and accounting protocol for computer networks and is described in Internet Engineering Task Force (IETF) Request for Comments (RFC) 6743. Existing systems are not capable of correlating data from multiple sources, perform analytics and present the information in a coherent format in a network wide scalable way. In addition, existing systems require more than one entity to perform similar functions, but still lack scalability to provide network scale solutions.

In various embodiments, network, service, and subscriber abstraction module 104 may further function as a data flow engine, which incrementally correlates the data from various sources to extract useful network-wide information. This along with high horizontal scalability allows network, service, and subscriber abstraction module 104 to provide network level abstraction to applications and OSS systems in Enterprise Applications 126. In various embodiments, network, service, and subscriber abstraction module 104 collects network wide data, performs a set of transformations on the data and correlates the data to make it presentable in a coherent format, which can be used by entities outside network, service, and subscriber abstraction module 104.

In particular embodiments, communication system 100 provides for a flexible mobile architecture/framework that enables operators to quickly create and modify use cases for monetization by harvesting, abstracting, and monetizing intelligence from the network. Monetization uses which may include such services as general consumer control points, targeted ad insertion, video, Femto/Wi-Fi/location/presence information, collaboration, Telepresence™, congestion/control, telematics, remote/video surveillance, automatic metering infrastructure, ATM/POS, remote monitoring/automation, information display, IMS cloud, voice and video over LTE, and messaging.

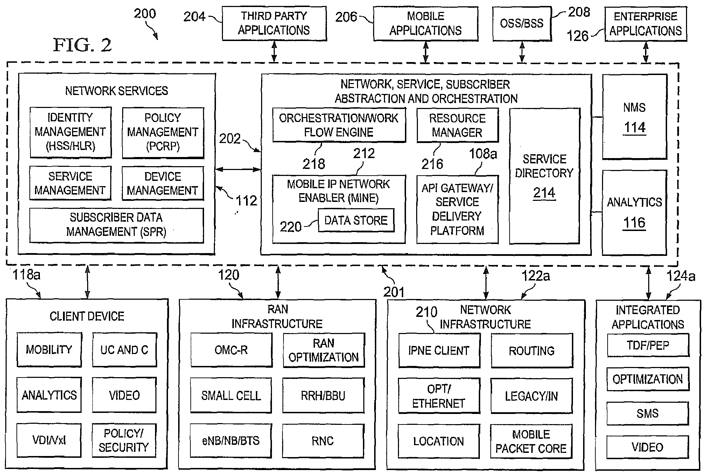

Referring now to FIGURE 2, FIGURE 2 is a simplified block diagram showing an embodiment of a hierarchical architectural framework of a communication system 200 for orchestrating mobile networks in accordance with another embodiment of the present disclosure. In the embodiment of FIGURE 2, communication system 200 includes four hierarchical layers. A first layer, a network layer, includes client device 118a, radio access network (RAN) infrastructure 120, network infrastructure 122a, and integrated applications 124a. The network layer may include fundamental network elements of one or more mobile packet core platforms and the services contained within these platforms. A second layer may include a network, service, subscriber abstraction, orchestration module 202, analytics module 116, and network management services component 114. A third layer may include a network services 112, and a fourth layer may include higher level services and applications provided by a service provider including third party applications 204, mobile applications 206, enterprise applications 126, OSS/BSS elements 208, and other billing, network management, and third party and/or operator applications. In a particular embodiment, network services 112, NMS 114, analytics 116 and network, service, subscriber abstraction, orchestration module 202 may be embodied within a server 201. Network infrastructure 122a includes an Internet Protocol network enabler (IPNE) client 210 that performs an interworking function to interface the network layer elements of the mobile packet core with network, service, subscriber abstraction, orchestration module 202. In a particular embodiment, network, service, subscriber abstraction, orchestration module 202 interfaces with capabilities of the mobile platform via Extensible Messaging and Presence Protocol (XMPP)/Extensible Markup Language (XML) and RESTFul interfaces as transport mechanism to expose these capabilities using an an XML schema. XMPP is a communications protocol for message-oriented middleware based on XML. XML is a markup language that defines a set of rules for encoding documents. Representational State Transfer (REST) is a style of software architecture for distributed systems and includes requests and responses built around the transfer of representations of resources. A resource can be essentially any coherent and meaningful concept that may be addressed and a representation of a resource is typically a document that captures the current or intended sate of a resource. Typically, a client begins sending requests when it is ready to make a transition to a new state. The representation of each application state may contain links that may be used the next time the client chooses to initiate a new state-transition. Conforming to REST constraints is generally referred to as being "RESTful." Capabilities and data that are exposed are stored in network, service, subscriber abstraction, orchestration module 202 as will be further described herein. The network layer may further include other components, which make up the network platform including client side capabilities providing linkages to other domains.

In various embodiments, network, service, subscriber abstraction, orchestration module 202 contains sub-elements including a API gateway/service delivery platform 108, mobile IP network enabler (MINE) component 212, a service directory component 214, a resource manager component 216, and an orchestration/work flow engine 218. MINE component 212 functions as an interface layer to IPNE client 210 and contains a central storage 220 to store network information such as call records and network structures that may be later accessed. In a particular embodiment, central storage 220 may be based upon a distributed file system structure and may be accessed by an XMPP interface. Access to the lower layer and requesting information from the network layer is performed through MINE component 212. MINE component 212 provides a single entry point to the network and also orchestrates network requirements.

Services directory component 214 is configured to publish network capabilities and resource availability for higher layer services. Resource manager component 216 is configured to publish network capabilities and resource availability for applications such as third party and operator applications. In various embodiments, service directory component 214 and resource manager component 216 perform publishing of these capabilities directly through MINE 212 component. In particular embodiments, service directory component 214 and resource manager component 216 publish capabilities through MINE component 212 using an interface such as an XMPP interface. In still other embodiments, service directory component 214 and resource manager component publish capabilities through MINE component 212 using application/3rd party API gateway 108.

API gateway/service delivery platform 108a exposes capabilities to the higher-level services and applications of the fourth layer such as third party applications 204, mobile applications 206, OSS/BSS elements 208, and other billing, network, network management, and third party and/or operator applications. In a particular embodiment, API gateway/service delivery platform 108a exposures capabilities to the higher-level services and applications of the fourth layer via a standards based GSMA OneAPI interface by the Groupe Speciale Mobile Association (GSMA). API gateway/service delivery platform 108a is further configured to provide adapters to standard service provider billing and backend systems. In at least one embodiment, the combination of these layers allows a service provider to rapidly implement new service and features. Orchestration/work flow engine 218 is configured to orchestrate various network elements and coordinate workflows between network elements using MINE component 212 as will be further described herein.

Analytics module 116 provides functions including leveraging data store 220 provided by MINE component 212 and analyzing network status based upon request from orchestration/work flow engine and responding via a specific trigger that may be applied to the network via a policy function. In a particular embodiment, MINE component 212 is configured to interface with analytics module 116 via an XMPP interface and/or standard mobile interfaces. In one or more embodiments, analytics module 116 may contain an analytics engine component, a modeling component, a profiling component and a visualization component. In various embodiments, analytics module 116 subscribes to information that is contained in data store 220 of MINE component 212 that analytics module 116, and analytics module 116 may uses this information to perform historical trend analysis. In some embodiments, MINE component 212 may be further configured to send real time feeds of data to analytics module 116 so that analytics module 116 may perform immediate processing of the data and/or respond to one or more triggers. In another embodiment, MINE component 212 may request a query be performed on data, making analytics module 116 subservient to MINE component 212, or more specifically making MINE component 212 a controller of analytics module 116. MINE component 212 may then trigger particular actions based on a query response received from analytics module 116.

Network services 112 may provide one or more of identity management, policy management, service management, device management, and subscriber data management functions, which may exist within a service provider network. MINE component 212is configured to provide a link between the functions provided by network services 112 and other network elements.

In accordance with various embodiments, one or more of the network elements of communication system 200, such as the mobile packet core of network infrastructure 122a and the TDF/PEP, optimization, and IMS elements of integrated applications 124a may be subscriber-aware network elements that are aware of the identity of a subscriber utilizing the network elements or services. Further in various embodiments, network services include subscriber databases such as the HSS/HLR, PCRF, OCS, and SPR. In accordance with various embodiments, network, service, subscriber abstraction, orchestration module 202 provides interconnection between the subscriber-aware network elements and the subscriber databases. In various embodiments, network, service, subscriber abstraction, orchestration module 202 orchestrates and coordinates workflow between the subscriber aware network elements and subscriber databases, and provides protocol translation between the various network elements and databases.

In accordance with various embodiments, the above-described framework allows service providers to easily offer services related to their network capabilities, dynamically optimize those capabilities, and create an environment, which enables rapid service enablement. Various embodiments of the described architecture allow a mobile service provider, a fixed line provider, and/or large enterprises to create a platform, which exposes network capabilities and allows application developers and walled gardened application developers to leverage the power of the network. Various embodiments may allow service providers to monetize the capabilities of the network by optimizing the infrastructure and then creating a service framework that allows service providers to quickly and efficiently create new service offers. In at least one embodiment, the above-described architecture integrates with the existing capabilities of the service provide to avoid "rip and replace" scenarios and ensures faster time to market.

One or more embodiments may provide one or more advantages including leveraging the existing service provider environment to eliminate a "rip and replace" scenarios, and allowing easy access to network capabilities which have historically been very difficult for application developers and service providers to access.

In one or more embodiments create a policy framework having three fundamental elements including policy, network abstraction and orchestration and analytics tied together in conjunction with network access. Various embodiments provide a service creation environment that ties these elements together into existing service provider OSS/BSS systems. Various embodiments of this framework may be used to create/run multiple different services such as business to consumer (B2C), business-to-business (B2B), machine-to-machine (M2M), and security services. Further, one or more embodiments one or more embodiments may provide a massively scalable framework that may be deployed in a cloud based architecture.

In an example workflow, network, service, subscriber abstraction, orchestration module 202 receives a service request from enterprise applications 126 such as an enterprise IT Telepresence server to a client device associated with a subscriber. In various embodiments, network, service, subscriber abstraction, orchestration module 202 provides protocol translation between network elements. In a particular example, the request from the third party provider is formatted as an HTTP/WebRTC request. The request includes a request for a guarantee of a particular quality of services for a predetermined time period. In response, orchestration/work flow engine 218 generates a DIAMETER request from the HTTP request and sends the DIAMETER request to the policy management, such as the PCRF, of network services 112 to determine if the service request meets one or more policies associated with the subscriber. Orchestration/work flow engine 218 may also generated a DIAMETER request to the identify management service, such as the HSS, of network services 112 to determine the identity of the subscriber associated with the service request, generate a DIAMETER request to OSS/BSS 208 to determine if the billing system will allow the service request. Orchestration/work flow engine 218 may further send a request to the mobile packet core of network infrastructure 122a to determine if there is any congestion in the network. Orchestration/work flow engine 218 may further send a request to the RAN Optimization of RAN infrastructure 120 to determine if there is congestion on the radio interface. In still other examples, orchestration/work flow engine 218 may request information from analytics module 116 to determine, based on historical information stored by analytics module 116, whether the network will be congested in the predetermined time period. Based on responses to these various requests, orchestration/work flow engine 218 may determine whether the initial request from the enterprise provider will be allowed.

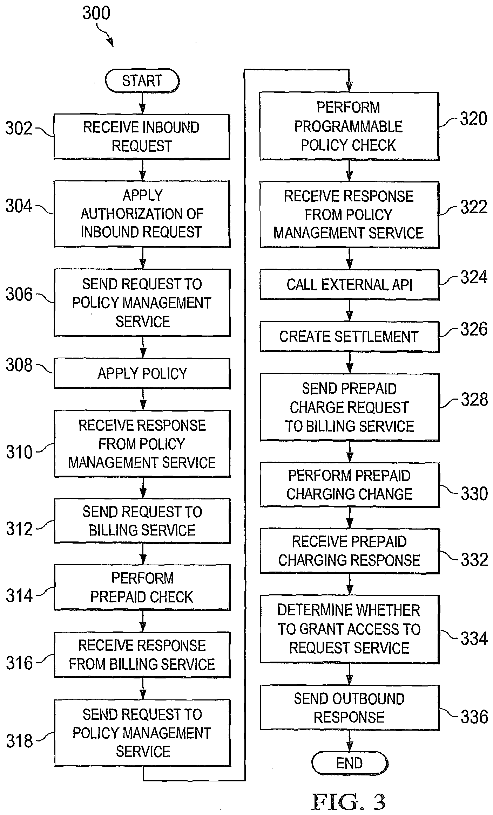

FIGURE 3 is a simplified flow diagram 300 of an embodiment of workflow coordination operations performed by orchestration/work flow engine 218. In 302, orchestration/work flow engine 218 receives an HTTP inbound service request from client device 118a associated with a subscriber. In a particular embodiment, the inbound service request is an HTTP inbound request. In at least one embodiment, the inbound request includes a request from an application of client device 118a for the providing of one or more services by the network to client device 118a. In a particular example, the request is a request for a streaming media presentation, such as a Telepresence session or other video/audio collaboration. In 304, orchestration/work flow engine 218 applies authorization into network services 112. In 306, orchestration/work flow engine 218 sends a request to the policy management service of network services 112 to determine whether the inbound request conforms to one or more policies associated with client device 118. In a particular embodiment, the policy management services is a PCRF. In 308, the policy management service applies one or more policies associated with the subscriber to the request to determine if the request is in compliance with the one or more policies. In accordance with various embodiments, a policy may be defined in any number of ways. For example, a policy could describe how to enforce a rule against a particular IP flow, the services that need to be orchestrated together to apply for a particular user service, or a set of security rules. In another example, the policy may describe which services are applicable to an application request and how those services show be orchestrated together in order to provide the requested service. In a particular example, a policy may describe how to orchestrate video optimization, deep packet inspection, and firewall services for a request for a Telepresence session. In 310, orchestration/work flow engine 218 receives a response from the policy management service regarding whether the request is in compliance with the one or more polices.

In 312, orchestration/work flow engine 218 sends a request to a billing service to perform a prepaid check to determine whether the subscriber has prepaid for the requested service. In a particular embodiment, the billing system is an OCS. In 314, the billing service performs the prepaid check to determine whether the subscriber has prepaid for the requested service. In 316, orchestration/work flow engine 218 receives a response from the billing service indicating whether the subscriber has prepaid for the requested service. In 318, orchestration/work flow engine 218 sends a request to the policy management service regarding whether the service request complies with one or more programmable policies. In various embodiments, the programmable policies are access control policies that are programmable such as by an application or administrator. In 320, the policy management service performs a check to determine whether the service request complies with the one or more programmable policies. In 322, orchestration/work flow engine 218 receives a response from the policy management service indicating whether the initial request complies with the one or more programmable policies.

In 324, orchestration/work flow engine 218 may call an external application-programming interface (API) in instances in which a third party services needs to be invoked to satisfy the initial service request. In a particular embodiment, the call to the external API is a call to an external HTTP endpoint associated with the external API. In 326, orchestration/work flow engine 218 creates a settlement for the service request. In 328, orchestration/work flow engine 218 sends a prepaid charge request to the billing service in order to request a charge for the service. In 330, the billing system performs a prepaid charging change in order to charge the subscriber for the created settlement. In 332, orchestration/work flow engine 218 receives a prepaid charging response indicating that the prepaid charging change has been performed.

In 334, orchestration/work flow engine 218 determines whether to grant access to the requested service to client device 118a. In at least one embodiment, orchestration/work flow engine 218 determine whether to grant access to the requested service by correlating the responses received from the network elements and services and making a decision based on the responses regarding whether the service request will be granted. For example, in a particular embodiment if any of the responses in the chain or responses indicate that the service request should not or cannot be granted, orchestration/work flow engine 218 will not grant the service request to client device 118a. For example, if the PCRF indicates that the service request will not satisfy a particular policy, if analytics module 116 indicates that there will not be available QOS for the predetermined time period necessarily to provide the requested service, or if the OCS indicates that the subscriber will not have enough balance remaining to pay for the requested service, orchestration/work flow engine 218 may indicate that the requested service will not be granted to client device 118a. In 336, orchestration/work flow engine 218 sends an outbound response message to client device 118a indicating whether the client device 118a is granted access to the requested service. In a particular embodiment, the outbound response is an HTTP outbound response.

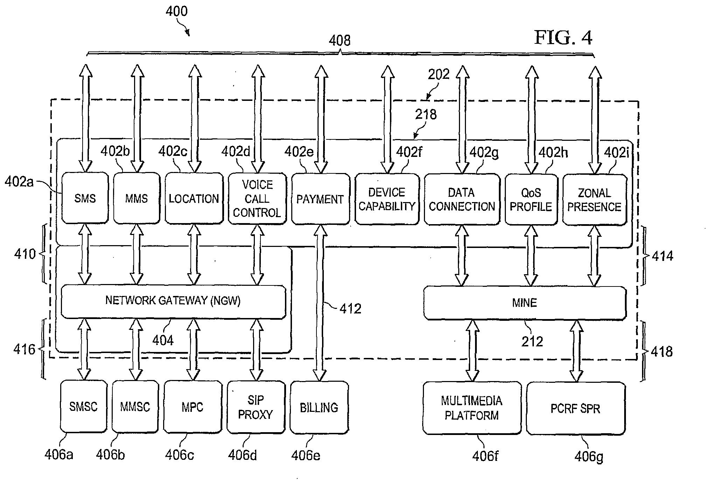

FIGURE 4 illustrates an embodiment of a protocol translation platform 400 of orchestration/work flow engine 218. In the embodiment illustrated in FIGURE 4, orchestration/work flow engine 218 includes one or more protocol translation modules 402a-402i. In the particular illustrated embodiment, orchestration/work flow engine 218 includes short message service (SMS) translation module 402a, multimedia messaging service (MMS) translation module 402b, location translation module 402c, voice call control translation module 402d, payment translation module 402e, device capability translation module 402f, data connection translation module 402g, QoS profile translation module 402h, and zonal presence translation module 402i. Network, service, subscriber abstraction, orchestration module 202 further includes network gateway (NGW) translation module 404, and MINE 212 in communication with orchestration/work flow engine 218.

Network, service, subscriber abstraction, orchestration module 202 is in further communication with one or more network elements 406a-406g. In the illustrated embodiment, the one or more network elements 406a-406g include short message service center (SMSC) 406a, multimedia messaging service center (MMSC) 406b, mobile platform controller (MPC) 406c, Session Initiation Protocol (SIP) Proxy server 306d, billing service 406e, multimedia platform 406f, and PCRF/SPR 406g. In the particular embodiment illustrated in FIGURE 4, SMS translation module 402a, MMS translation module 402b, location translation module 402c, and voice call control translation module 402d are in communication with network gateway translation module 404, and payment translation module 402e is in communication with billing service 406e. Data connection translation module 402g, QOS profile translation module 402h, and zonal presence translation module 402i are in communication with MINE 212.. NGW 404 is in further communication with SMSC 406a, MMSC 406b, MPC 406c, and SIP proxy server 406d. MINE 212 is in further communication with multimedia platform 406f and PCRF/SPR 406g.

Each of protocol translation modules 402a-402i and network gateway translation module 404 are configured to receive a message, such as a request, formatted in a first protocol format and translate the message to be formatted in a second protocol format. In the illustrated embodiment of FIGURE 4, each protocol translation modules 402a-402i is configured to receive a message formatted in a first format 408. In a particular example, first protocol format 408 is an HTTP format. Protocol translation modules 402a-402d may be configured to translate the message received in the first protocol format 408 to a second protocol format 410 and communicate the translated message to NGW 410. Payment translation module 402e may be configured to translate the message in first protocol format 408 to a third format 412 and communicate the translated message to billing service 406e. Protocol translation modules 402g-402i may be configured to translate the message in the first protocol format 408 to a fourth format 414 and communicate the translated message to MINE 212. In a particular embodiment, fourth protocol format 414 is an XMPP protocol format. Network gateway translation module 404 may be further configured to translate the message received from each of protocol translation modules 402a-402d in second protocol format 410, translate the message into a fifth protocol format 416, and communicate the translated message to network elements 406a-406d. MINE 212 may be configured to translate message received from protocol translation modules 402g-402i in fourth format 414 to a sixth protocol format 418 and communicate the translated message to network elements 406f-406g.

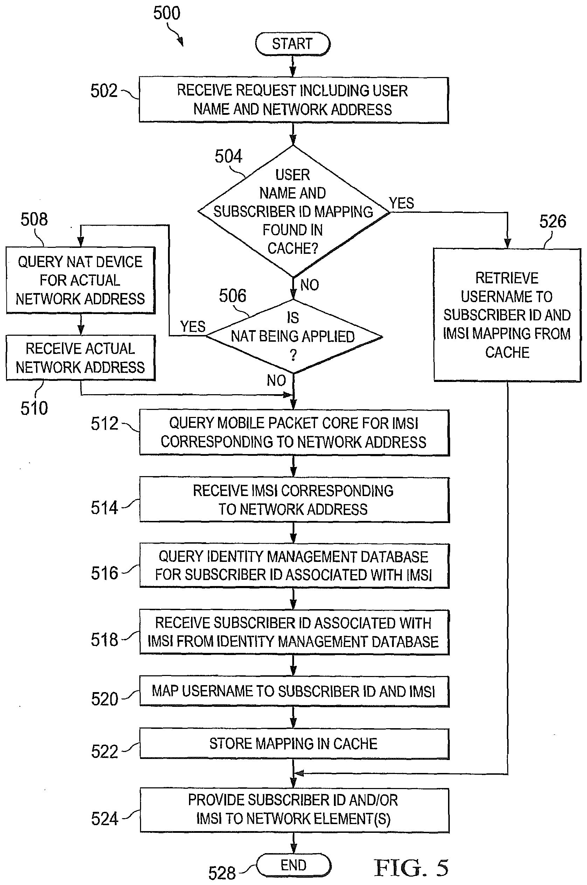

FIGURE 5 is a simplified flow diagram 500 of an embodiment of subscriber identity normalization operations performed by orchestration/work flow engine 218. In 502, orchestration/work flow engine 218 receives a request including a username and network address associated with a user who is also a subscriber of a mobile network. In a particular embodiment, the request may be received from a third party service provider such as a an enterprise IT server or enterprise cloud service provider, in response to a request from a client device associated with the user and the username is an identifier used by the third party service provider to identify the user. In the case of an enterprise IT organization, this username may be represented as an email address, employee ID number, or some other enterprise-allocated identifier. In a particular embodiment, the network address is an Internet protocol (IP) address associated with the user as seen by the third party service provider. This IP address may be different from the IP address known to the mobile network if Network Address Translation (NAT) is being applied. In 504, orchestration/work flow engine 218 determines whether a mapping of the received username and a subscriber identifier (ID) is found in a cache associated with orchestration/work flow engine 218. If a mapping of the username and a subscriber ID is not found in the cache, the operations continue to 506. In 506, orchestration/work flow engine 218 determines whether NAT is being applied the received network address. If NAT is being applied to the received network address, the operations continue to 508 in which orchestration/work flow engine 218 queries a NAT device responsible for the network address translation for an actual network address associated with the received request. In 510, orchestration/work flow engine 218 receives the actual network address associated with the received request and continues to 512. If in 506, orchestration/work flow engine 218 determines that NAT is not being applied, the operations continue to 512.

In 512, orchestration/work flow engine 218 queries the mobile packet core of network infrastructure 122a for an International Mobile Subscriber Identity (IMSI) corresponding to the network address. In 514, orchestration/work flow engine 218 receives the IMSI corresponding to the network address from the mobile packet core. In 516, orchestration/work flow engine 218 queries an identity management database for a subscriber identifier (ID) associated with the IMSI. In a particular embodiment, the subscriber ID is a Mobile Subscriber Integrated Services Digital Network-Number (MSIDN) or a mobile phone number associated with the client device of the subscriber. Although particular embodiments have been described using IMSI and MSIDN identifiers, it should be understood that in other embodiments any type of subscriber identifier may be used. In at least one embodiment, the identity management database is an HSS/HLR. In 518, orchestration/work flow engine218 receives the subscriber ID associated with the IMSI from the identity management database. In 520, the username is mapped to the subscriber ID and the IMSI. In 522, orchestration/work flow engine 218 stores the mapping of the username, subscriber ID, and IMSI in the cache associated with orchestration/work flow engine 218.

In 524, orchestration/work flow engine 218 provides the subscriber ID and/or IMSI to one or more network elements that will use the IMSI and/or subscriber ID to fulfill the request for service. If it is determined in 504, that the username and subscriber ID mapping are found in the cache associated with orchestration/work flow engine 218, the operations continue to 526 in which orchestration/work flow engine 218 retrieves the subscriber ID and IMSI mapping to the username from the cache and proceeds to 524. After 524, the operations end at 528. By caching of the mapping of the username and externally understood IP address to the subscriber ID, IMSI and mobile network-understood IP address, subsequently requests including the username do not require another query of the network elements such as the identity management database or mobile packet core to determine the subscriber identity and IMSI and IP address mapping.

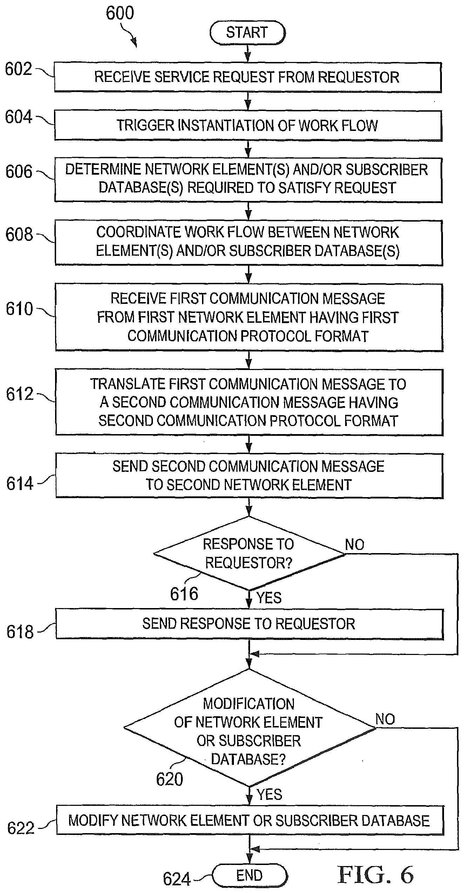

FIGURE 6 is a simplified flow diagram 600 of another embodiment of workflow coordination operations performed by orchestration/work flow engine 218. In 602, orchestration/work flow engine 218 receives a service request from a requester. In 604, an instantiation of work flow is triggered in response to the request. In one embodiment, the request is received from an internal network element associated with a requester located inside of communication system 200. In a particular application, the request is received from one of integrated application 124a such as the IMS. In another example, the request is received from the OSS/BSS 208 as a result of a user balance running low to trigger an orchestration/work flow event. In still another example, analytics module 116 may detect congestion and send the request to trigger the orchestration/work flow event. In still another embodiment, the request is received from an external network element that requires the instantiation of a workflow, which will result in a response to the requestor. For example, the request may be received from a third-party streaming media provider. In 606, orchestration/work flow engine 218 determines one or more network elements and/or one or more subscriber databases that required to satisfy and orchestrate the request. In 608, orchestration/work flow engine 218 coordinates workflow between the one or more network element(s) and/or subscriber database(s) in order to satisfy the request.

In 610, orchestration/work flow engine 218 receives a first communication message from a first network element having a first protocol format. In 612, orchestration/work flow engine 218 translates the first communication message to a second communication message having a second communication protocol format. In 614, orchestration/work flow engine 218 sends the second communication message to a second network element.

In 616, orchestration/work flow engine 218 determines whether a response to the requester is required. If a response to the requester is required, orchestration/work flow engine 218 sends a response to the requester in 618 and the operations continue to 620. If it is determined in 616 that a response to the requestor is not required, the operations continue to 620. In 620, orchestration/work flow engine 218 determines whether modification of one or more network elements and/or subscriber databases is required by the workflow. If modification of one or more network elements and/or subscriber databases within communication system 200 is required, the operations continue to 622. In 622, orchestration/work flow engine 218 modifies the one or more network elements and/or subscriber databases. In particular embodiments, the modification of configuration information or other data within the one or more network elements and/or subscriber databases.

In a particular example, RAN optimization system of RAN infrastructure 120 detects congestion and notifies PCRF of network services 112 that there is congestion through orchestration/work flow engine 218. The PCRF may instantiate a workflow that requests that video optimization be instantiated for all heavy network users that are nearing their limit on the amount of data that they can consume for the month. Accordingly, the PCRF may initiate a workflow in which the orchestration/work flow engine 218 determines me the heavy users who are nearing their quota limitation by querying the analytics module 116 to determine who are the heavy users, query the online charging system to determine the users who are nearing their quota, return a response to the PCRF. The PCRF may instantiate a rule, which enforces video optimization for these users and triggers a service path where traffic associated with those users goes to the video optimization.

The operations then continue to 624 in which the operations end. If it is determined that modification of one or more network elements and/or subscriber databases is not required, the operations continue to 624 in which the operations end.

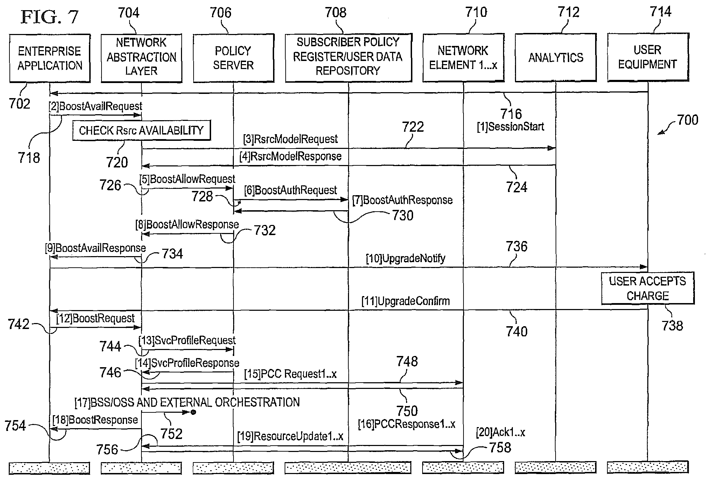

FIGURE 7 is a simplified diagram of an embodiment of a call flow 700 of network, service, subscriber abstraction, orchestration module 202. The call flow 700 is illustrated using number of network elements and subscriber databases including a enterprise application 702, a network abstraction layer (NAL) 704 of network, service, subscriber abstraction, orchestration module 202, a policy server (PCRF) 706, a subscriber policy register (SPR)/user data repository (UDR) 708, network element 1 to network element x (NE1...X) 710, analytics (AN) 712, and user equipment 714. In at least one embodiment, user equipment 714 is client device 118a. In 716, UE 714 sends a session start request (SessionStart) to enterprise application 702. In the particular embodiment illustrated in FIGURE 7, the session start request is a request for a TurboBoost service in which UE 714 is requesting an on-demand dynamic increase in network performance. In 718, enterprise application 702 sends a Boost Availability Request (BoostAvailRequest) to NAL 704. In 720, NAL 704 checks for the availability of the resource(s) required to satisfy the session start request. In 722, NAL 704 sends a Resource Model Request to (ResrchModeIRequest) to AN 712 requesting analytics modeling of whether the resource will be available. In 724, AN 712 sends a Resource Model Response (RsrcModelResponse) indicating whether the resource will be available to NAL 704. In 726, NAL 704 sends a Boost Allow Request (BoostAllowRequest) to PCRF 706 requesting whether the service request is to be allowed based upon one or more policies. In 728, PCRF 706 sends a Boost Authorization Request (BoostAuthRequest) to SPR/UDR 708. In 730, SPR/UDR 708 sends Boost Authorization Response (BoostAuthResponse) to PCRF 706. In 732, PCRF 706 sends a Boost Allow Response (BoostAllowResponse) to NAL 704. In 734, NAL 704 sends a Boost Availability Response (BoostAvaiIResponse) to enterprise application 702.

In 736, enterprise application 702 sends an Upgrade Notification message (UpgradeNotify) to UE 714 indicating that there will be an additional charge to utilize the requested service. In 738, the user accepts the charge. In 740, UE 714 sends an Upgrade Confirmation message (UpgradeConfirm) to enterprise application 702. In 742, enterprise application 702 sends a Boost Request (BoostRequest) to NAL 704. In 744, NAL 704 sends a Service Profile Request (SvcProfileRequest) to PCRF 706 requesting user profile information associated with the user of UE 714. In 746, PCRF 706 sends a Service Profile Response (SvcProfileResponse) to NAL 704 including the user profile information. In 748, NAL 704 sends one or more Policy Charging Control (PCC) Requests (PCCRequest1...x) to one or more of network elements (NE1...x) 710. In 750, one or more of network elements (NE1...x) 710 sends one or more PCC Responses (PCCResponse1...x) to NAL 704.

In 752, NAL 704 performs orchestration of a BSS/OSS and external network elements necessary to provide the requested service. In 754, NAL 752 sends a Boost Response (BoostResponse) to enterprise application 702. In 756, network elements (NE1...x) 710 send one or more Resource Update messages (ResourceUpdate1...x) to NAL 704. In 758, NAL 704 sends one or more acknowledgement messages (Ack1...x) to one or more of network elements (NE1...x) 710. It should be understood that each of the messages exchanged between the network elements and subscriber databases may be received in a particular protocol format utilized by the sending network element and translated to a particular protocol format utilized by the receiving network element.

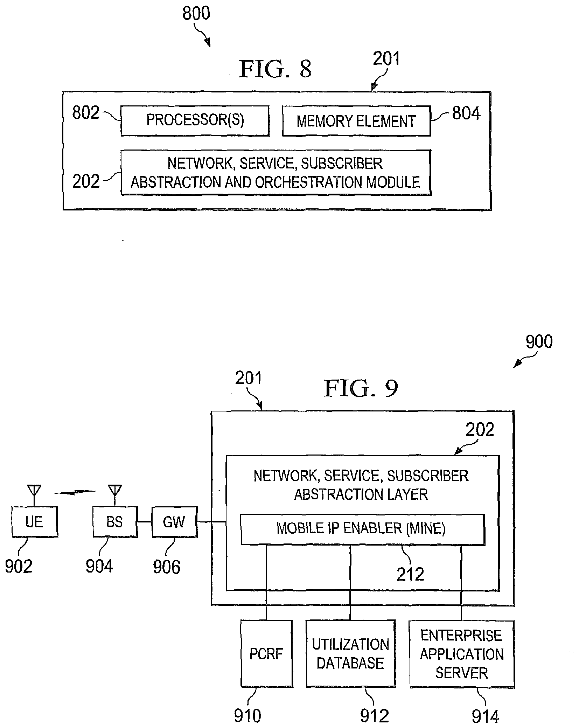

FIGURE 8 is a simplified block diagram 800 illustrating a particular embodiment of server 201 of communication system 200 of FIGURE 2. The particular embodiment of server 201 of FIGURE 2 includes a processor(s) 802, memory element 804, and network, service, subscriber abstraction, orchestration module 202. Processor(s) 802 are configured to execute software instructions to perform various operations of server 201 as described herein. Memory element 804 may be configured to store software instructions and data associated with server 201. Network, service, subscriber abstraction, orchestration module 202 is configured to implement the various orchestration, workflow coordination, and translation functions as described herein.

Although the particular embodiment illustrated in FIGURE 8 shows server 201 as including a single node, it should be understood that in other embodiments server 201 may include any number of nodes. In still other embodiments, a cluster may be formed of any number of processing nodes distributed throughout a number of servers or other network elements within a communication network.

In still other embodiments, mobile IP enabler (MINE) component 212 is configured to provide for integrated signaling between one or more network elements associated with a mobile data network and one or more network elements associated with enterprise networks. In particular embodiments, MINE component 212 provides a network address translation function in which an identifier, such as an Internet Protocol (IP) address, associated with a particular user equipment device is mapped to an identifier, such as a username, used by an enterprise network to identify a particular user. Examples of enterprise services offerings that may be provided to the user equipment device by one or more enterprise networks include hosted communications, telepresence, or enterprise voice over LTE services.

FIGURE 9 is a simplified block diagram of an embodiment of a communication system 900 for providing integrated signaling between a mobile data network and enterprise networks. Communication system 900 includes user equipment device 902 in communication with a base station 904. Base station 904 is in further communication with a gateway node 906. Gateway node 906 is in further communication with a server 201. Server 201 includes network, service, and subscriber abstraction layer 202. Network, service, and subscriber abstraction layer 202 further includes mobile IP enabler (MINE) component 212 as previously discussed herein. MINE component 212 is in further communication with a PCRF component 910, a utilization database 912, and an enterprise application server 914.

User equipment device 902 may include any mobile client device such as a mobile telephone, a smartphone, or a tablet. In a particular embodiment, user equipment device 902 may include client device 118 as previously discussed herein. In one or more embodiments, base station 904 includes a base station of a mobile network configured to communicate with user equipment device 902 via a wireless signal. Gateway node 906 is configured to function as a gateway between the mobile network and server 201 within a core network. PCRF 910 is configured to manage policies associated with one or more subscribers associated with user equipment such as user equipment device 902. Utilization database 912 is configured to maintain network load and capacity information regarding various locations within the mobile network. Enterprise application server 914 is an application server located within an enterprise network configured to provide one or more enterprise applications to user equipment device 902.

In various embodiments, MINE component 212 is configured to enable signaling between components, network elements and/or devices of one or more enterprise networks and components, network elements and/or devices of one or mobile networks. A challenge when enabling over-the-top application provided by an enterprise network is that a user identifier used by the enterprise network often differs from a user identifier used by the mobile network. For example, an enterprise network may use its own internal IP address to identify a particular user while the user is identified by a public IP address within the packet core network. In one or more embodiments, MINE component 212 receives a request from an enterprise network, which includes a internal user identifier, such as an internal IP address, used by the enterprise network to identify a particular user and/or user equipment. MINE component 212 then performs a rewrite within the network, service, and subscriber abstraction layer 202 to associate the internal user identifier with a public identifier, such as a public IP address, used to identify the user and/or user equipment within the mobile network. Accordingly, when a request is made by an application or service provided by the enterprise network to a network element or component outside of the enterprise network, such as to a policy server, a home subscriber server (HSS), or the network infrastructure, that request may be made using the public identifier rather than the internal identifier.

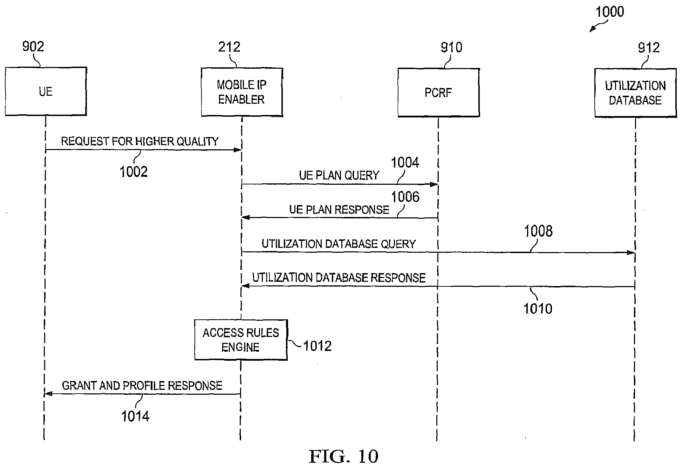

FIGURE 10 is a simplified flow diagram 1000 of an embodiment of signaling between an mobile network and an enterprise network for a quality-of-service (QoS) request. In 1002, user equipment device 902 sends a request for higher quality-of-service (QoS) to MINE component 212 via gateway 906. In one or more embodiments, the request for higher quality of service may include a request for assignment of a higher QoS Class Identifier (QCI) to the user equipment device 902 or a higher bandwidth allocation to the user equipment device 902. A QCI specifies the treatment of IP packets received on a particular bearer associated with user equipment device 902. QCI may specify various quality parameters associated with the bearer such as a particular resource type, a particular priority, an acceptable packet delay, and/or an acceptable packet error for the bearer. In a particular embodiment, the request for higher QoS may be generated by a client application associated with user equipment device 902. In 1004, MINE component 212 sends a user equipment (UE) plan query to PCRF 910 to determine whether a user service plan and/or policy associated with user equipment device 902 allows for higher QoS and/or bandwidth to be allocated to user equipment device 902. In 1006, MINE component 912 receives a UE plan response message including an indication regarding whether user equipment device 902 is associated with a plan and/or policy that allows for higher QoS and/or bandwidth too be allocated to user equipment device 902. In 1008, MINE component 212 sends a utilization database query to utilization database 912 to inquire whether the current location of user equipment device 902 and/or a location to which user equipment device 902 is headed can handle additional load in the mobile network and/or what radio types should be used. In 1010, MINE component 212 receives a utilization database response message from utilization database 912 indicating whether current location and/or anticipated location of user equipment device 902 can handle additional load in the mobile network and/or radio types that should be used.

In 1012, MINE component 212 accesses a rules engine to correlate information regarding radio conditions, the user service plan and/or application requirements of the client application to determine the QoS parameters to be granted to user equipment device 902 in response to the request for additional QoS and/or bandwidth. In 1014, MINE component 212 sends a grant and user profile to user equipment device 902 for the session. The grant indicates QoS parameters for the session. In one or more embodiments, the QoS parameters indicated by the grant may include a QCI value, bandwidth parameters, and/or a radio priority to be used during the session.

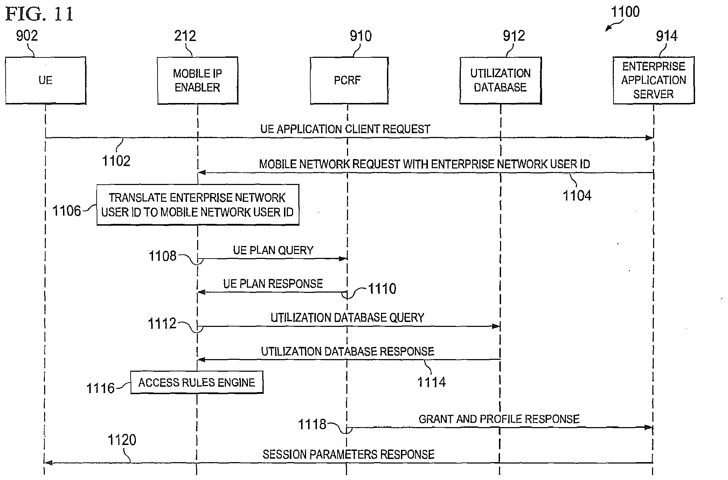

FIGURE 11 is a simplified flow diagram 1100 of another embodiment of signaling between an mobile network and an enterprise network for a quality-of-service (QoS) request. In the embodiment illustrated in FIGURE 11, enterprise application server 914 includes one or more applications and/or services that user equipment device 902 desires to access. In 1102, user equipment device 902 sends a UE application client request to establish a session with an application of enterprise application server 914 via gateway 906. In a particular embodiment, the UE application client request may be generated by a user equipment application client associated with user equipment device 902. In 1104, enterprise application server 914 sends a mobile network request to the mobile network that is received by MINE component 212. The mobile network request includes a user identifier used to identify the user associated with user equipment device 902 within the enterprise network. In a particular embodiment, the user identifier used to identify the user in the enterprise network is an internal IP address used by the enterprise network to identifier the user.

In 1106, MINE component 212 translates the enterprise network user identifier into a mobile network user identifier used by the mobile network to identify the user. In 1108, MINE component 212 sends a user equipment (UE) plan query to PCRF 910 to determine whether a user service plan and/or policy associated with the user of user equipment device 902 allows for higher QoS and/or bandwidth to be allocated to user equipment device 902. The UE plan query includes the mobile network user identifier, which is used by the PCRF 910 to match a user profile or plan associated with the user. In 1110, MINE component 912 receives a UE plan response message including quality of service information indicated by a plan and/or policy associated with the user. In a particular embodiment, the UE plan response message includes quality of service information having an indication regarding whether a plan and/or policy associated with the user allows for higher QoS and/or bandwidth to be allocated to user equipment device 902. In 1112, MINE component 212 sends a utilization database query to utilization database 912 to inquire whether the current location of user equipment device 902 and/or a location to which user equipment device 902 is moving can handle additional load in the mobile network and/or what radio types should be used. In 1114, MINE component 212 receives a utilization database response message from utilization database 912 indicating whether a current location and/or an anticipated location of user equipment device 902 can handle additional load in the mobile network and/or radio types should be used.

In 1116, MINE component 212 accesses a rules engine to correlate information regarding radio conditions, the user service plan and/or application requirements of the client application to determine the QoS parameters to be granted to user equipment device 902 in response to the request for additional QoS and/or bandwidth. In 1118, MINE component 212 sends a grant and user profile to application server 912 for the session. The grant indicates QoS parameters for the session. In one or more embodiments, the QoS parameters indicated by the grant may include a QCI value, bandwidth parameters, and/or a radio priority to be used during the session. In 1120, application server 912 sends a session parameters response message to user equipment device 902 indicating QoS parameters to be used for the session.

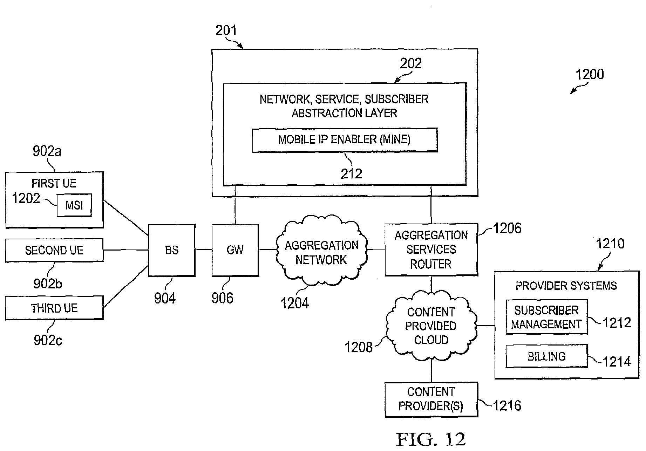

FIGURE 12 is a simplified block diagram of another embodiment of a communication system 1200 for providing integrated signaling between mobile data network and enterprise networks. Communication system 1200 includes first user equipment (UE) 902a, second UE device 902b, and third UE device 902c in communication with a base station 904. First UE device 902a includes a media services interface (MSI) application 1202. Base station 904 is in further communication with a gateway node 906. Gateway node 906 is in further communication with an aggregation network 1204. Communication system 1200 further includes an aggregation services router 1206 in communication with aggregation network 1204. Gateway node 906 and aggregation services router 1206 are each in communication with network, service, and subscriber abstraction layer 202. Network, service, and subscriber abstraction layer 202 further includes mobile IP enabler (MINE) component 212.

Aggregation services router 1206 is further in communication with a content provider cloud 1208. Content provider cloud 1208 is in further communication with provider systems 1210, which may include a subscriber management module 1212 and a billing module 1214. Content provider cloud 1208 may be in further communication with content provider(s) 1216. In one embodiment, the content provider cloud 1208 may be a hosted enterprise service, such as hosted collaboration, and the content provider 1216 may be an enterprise telephony system.

Media applications, such as video applications, typically not only need a high bandwidth connection but also a stable connection so that they can perform bit rate adaptation to match the available capacity to deliver the best possible experience to the user. Mobile environments are incredibly fickle when it comes to network performance. As the mobile user moves in the spatial environment, the effective network capacity available to the user can change rapidly. Additionally, even if the user stays still, the environment may change do still provide a non-stable network capacity connection.

Various embodiments described herein provide for the capability for the mobile network to interact with a mobile client to enable the mobile network to receive continuous feedback on the state of traffic flows that are sent to the client on a per application and/or per flow basis to enable the mobile network to map users, devices and location to one or more quality of delivery metrics. Using this ability of the mobile network to interact with an end client and to determine the prevailing network service conditions, the mobile network may exploit this information to dynamically adapt the service delivered to maximize the experience of all users and devices in accordance with the network policy and the prevailing mobile network conditions.

In some embodiments, the mobile network system may provide feedback to the mobile client to provide predictive suggestions to specific users of video or other applications (both wired and wireless) such that the applications themselves may adapt to better match the changing network conditions. These predictions may include: an impending decrease in capacity in which MINE component 212 may advertise the impending describes to the endpoints so that the application can tune preemptively to the correct bitrate based on available mechanisms without actually incurring loss; an increase in capacity in which MINE component 212 may realize that the bit rate used by the application is below the available capacity (perhaps due to movement of the environment, change in service plan, etc.), and MINE component 212 may inform the application of the increased available capacity so that the application may increase its encoding bitrate to deliver higher quality video; change in loss properties in which MINE component 212 is aware of the lossiness of particular regions and environments and by conveying this information to a video application, the video application is able to make better decisions on how much forward error correction (FEC) should be applied to the media stream; and for an adaptation in process MINE component 212 may inform the client that the network is attempting to restore an acceptable level of service and that the client should refrain from enacting any client adaptation until requested to do so by the mobile network client.

In one or more embodiments, MSI SDK1202 is a software development kit (SDK) that exposes a series of API's to enable co-resident applications to better leverage network services to improve performance and increase serviceability. The MSI is associated with first UE device 902a that is configured to integrate enterprise applications and/or services such as applications and/or services provided by one or more content providers 1216 with network, service, subscriber abstraction layer 202. MSI application 1202 enables network, service, subscriber abstraction layer 202 to become aware of and monitor the service or application. In one or more embodiments, network, service, subscriber abstraction layer 202 monitors the performance of a particular application and may make determinations using monitored data received from MSI application 1202 and other information received from other network elements and components regarding whether adjustments should be made to change the quality of the experience provided by the application and/or service based on either default or configured performance thresholds. In a particular embodiment, network, service, subscriber abstraction layer 202 may change a bandwidth and/or QCI value allocated to the application or service and/or redirect the UE to move to a different radio or WiFi network to enable a user or subscriber to obtain a better experience from the application and/or service.

In various embodiments MSI SDK 1202 is configured to make it easier for applications to integrate with MINE component 212. This integration allows applications to become "network aware" such that applications are aware of what happens in the network and that the network itself is aware of how the application is performing. Accordingly, MINE component 212 allows more intelligent decisions to be made within the network to better allocate resources to meet user expectations. In one or more embodiments, MSI SDK 1202 includes a service discovery mechanism to allow client devices such as first UE device 902a to discover MINE component 212 and a registration mechanism to register first UE device 902a with MINE component 212. During registration, MSI application 1202 may pass metadata that describes the UE, the application and its associated flows, including a mobile network identifier associated with first UE device 902a to MINE component 212. MINE component 212 may then map the mobile network identifier to a user identifier, such as a username, used by provider systems 1210 and register first UE device 902a with MINE component 212. Upon registration, MINE component 212 becomes aware of applications running on first UE device 902a. In one or more embodiments, MSI SDK 1202 may pass supplemental metadata to MINE component 212 such as identifying a particular data flow as either teleconferencing video, teleconferencing audio, or teleconferencing data.

Upon knowing the identity of the user, MINE component 212 may access provider systems 210 to determine whether the user has a contract and/or policy that guarantees a particular quality experience for the user as opposed to a user who does not have such a contract and/or policy. In one or more embodiments, MSI SDK1202 is configured to calculate performance metrics or statistics on behalf of an application or service. In other embodiments, if an application or service calculates its own performance metrics or statistics, the application or service may pass the performance metrics or statics to MINE component via the MSI SDK's common management interface.

Upon registration by MSI application 1202 with MINE component 212, MINE component 212 may connect to MSI application 1202 and indicate to MSI SDK 1202 that it is interested in receiving particular notifications including performance measurements obtained by MSI SDK 1202 for an application or service, such as packet loss, jitter or delay, from MSI SDK 1202. MINE component 212 may be further configured to set one or more thresholds related to the performance monitoring data and if one or more of those thresholds are exceeded, MINE component 212 may take that information as well as other information from the network to make intelligent decisions to determine whether the user is receiving an acceptable experience in a current class of which the user is a member. In a particular embodiment, exceeding a threshold is indicative of the user experiencing a decreased quality of experience. For example, if the user has been guaranteed a particular quality of service and MINE component 212 determine that the user is not currently experiencing the particular quality of service, MINE component 212 may be configured to change the QCI value for the user's bearer channel and place the user in a higher priority queue to rectify the problems the user is currently experiencing. Alternatively, the MINE component 212 may also decide to direct the UE 902a device to move to a different radio or WiFi network based upon the current performance feedback and notifications. In various embodiments, MSI SDK 1202 may send performance statistics to MINE component 212 periodically or upon request from MINE component 212.

Accordingly, various embodiments provide for a dynamic performance feedback for user equipment applications and services so that MINE component 212 may make intelligent performance management decisions as well as intelligent cost management decisions within the network.

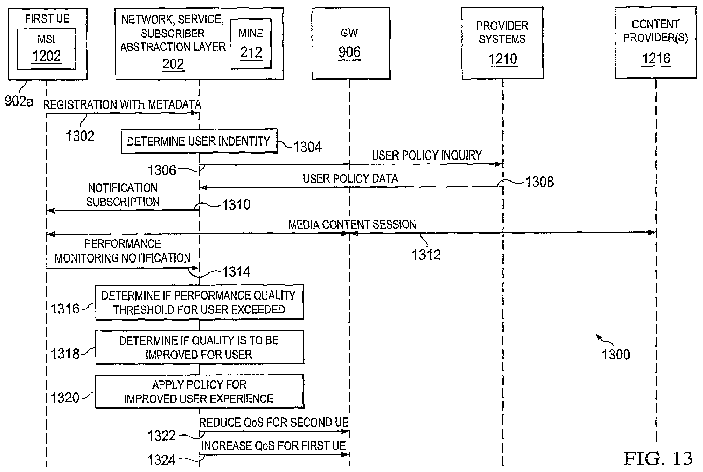

FIGURE 13 is a simplified flow diagram 1300 of another embodiment of signaling between a mobile network and an enterprise network. In 1302, media services interface (MSI) SDK 1202 of first device UE device 902a sends a registration request to MINE component 1302 of network, service, subscriber abstraction layer 202. The registration request may include metadata such as an identifier associated with first UE device 902a. In 1304, MINE component 212 determines a user identity associated a user of first UE device 902a based upon the received identifier. In a particular embodiment, MINE component 212 maps the received identifier to a username associated with the user. In 1306, MINE component 212 sends a user policy inquiry to provider systems 1210 to determine whether the user identified by the user identity has a policy associated with the user including rules for determining the services available to the user as well as a quality level of the provided services. In a particular embodiment, the provider systems 1210 include a policy and charging rules function (PCRF) which manages and stores policy information associated with one or more users. In 1308, provider systems 1210 sends user policy data including policy information associated with the identified user to MINE component 212.

In 1310, MINE component 212 sends a notification subscription to MSI SDK 1202. The notification subscription indicates to MSI SDK 1202 one or more performance-monitoring notifications that MINE component 212 wishes to subscribe in order to receive the performance monitoring notifications from MSI SDK 1202. The performance monitoring notifications include one or more performance metrics or thresholds related to an application or service that is to be provided from the enterprise network, such as content provider(s) 1216 to first UE device 902a. In 1312, a media content session is established between content provider(s) 1216 and first UE device 902a in which media content such as audio and/or video content is provided by content provider(s) 1216 to first UE device 902a.

In 1314, MSI SDK 1202 sends a performance monitoring notification to MINE component 212. The performance monitoring notification includes performance data obtained or calculated by MSI SDK 1202 indicating a quality of delivery of the media content to first UE device 902a by the media content session. In a particular embodiment, MSI application 1202 may calculate Transmission Control Protocol (TCP) performance metrics, Real-time Transport Protocol (RTP) performance metrics, and/or wireless transmission performance metrics associated with the media content session such as packet loss or packet delay. MSI SDK 1202 may further send a summary of the calculated performance metrics summary to MINE component 212 in the performance monitoring notification. In various embodiments, MSI application 1202 may send a performance monitoring notification to MINE component 212 on a periodic basis such as every fifteen seconds during the duration of the media content session or based upon a monitoring threshold being crossed.

In 1316, MINE component 212 determines if the performance monitoring data for the session has exceeded a performance quality threshold for the particular user. In 1318, in response to determining that the performance quality threshold has been exceeded for the session, MINE component 212 determines if quality is to be improved for the user based upon the user profile and available resources within the network. In various embodiments, MINE component 212 may evaluate information obtained from other network elements and/or components, such as signaling diagnostics, in addition to the received performance monitoring data in order to determine whether the quality is to be improved for the user. For example, MINE component 212 may obtain information from analytics module 116 to determine current and/or historical information regarding network traffic in order to determine whether quality is to be increased for first UE device 902a. In other embodiments, MINE component 212 may poll other user equipment from the same cell zone to evaluate the type of device, application, user plan and usage to determine whether quality is to be increased for first UE device 902a. In still other embodiments, MINE component 212 may receive cell site congestion notifications including cell site congestion information from one or more network elements and correlate the cell congestion information with the performance monitoring data received from MSI SDK 1202 to determine whether quality is to be increased for first UE device 902a.

In 1320, MINE component 212 applies a policy to the media content session for an improved user experience by increasing one or more quality parameters associated with the media content session. In a particular embodiment, MINE component 212 may reallocate one or more network resources in the network in order to increase the user experience provided to first UE device 902a. In one or more embodiments, MINE component 212 may decrease the quality of experience provided to second UE device 902b in order to increase the user experience provided to first UE device 902a. For example, a policy associated with a user of second UE device 902b may not guarantee a high quality of experience to the user of second UE device 902b as compared to the policy associated with the user of first UE device 902a. In 1322, MINE component 212 sends a message to GW 906 to reduce a QoS value associated with second UE device 902b. In a particular embodiment, MINE component 212 changes a QCI value associated with a bearer channel of second UE device 902b in order to reduce a QoS for second UE device 902b. In 1324, MINE component sends a message to GW 906 to increase a QoS value associated with first UE device 902a. In a particular embodiment, MINE component 212 changes a QCI value associated with a bearer channel of first UE device 902a associated with the media content session in order to reduce a QoS for first UE device 902a.

In still another embodiment, first UE device 902a, second UE device 902b, and third UE device 902c each include MSI SDK 1202 and are configured to include adaptive bit rate (ABR) clients having the capability of varying the bit rate of transmitted and received data. In such embodiments, first UE device 902a, second UE device 902b, and third UE device 902c may each send a registration request including metadata indicating that first UE device 902a, second UE device 902b, and third UE device 902c support ABR capability. First UE device 902a, second UE device 902b, and third UE device 902c may then periodically send performance monitoring data to MINE component 212 including measured performance monitoring data associated with one or more applications or services provided to first UE device 902a, second UE device 902b, and third UE device 902c, respectively. First UE device 902a, second UE device 902b, and third UE device 902c may each further send adaption data to MINE component 212 indicating one or more ABR adaption capabilities of first UE device 902a, second UE device 902b, and third UE device 902c such as the ability to change between using different codecs, adaptation techniques or error correction/concealment procedures during ABR adaptation.

If MINE component 212 determines that one or more performance quality thresholds has been exceed based upon the received performance monitoring data and/or information received from other network elements, MINE component 212 may send a metadata adaptation message to a respective MSI application 1202 of first UE device 902a, second UE device 902b, or third UE device 902c indicating that the bit rate associated with a particular session should be adjusted. For example, MINE component 3212 may instruct a first UE device 902a to drop its ABR rate from 500kbps to 350kps in response to receiving monitoring data indicating that a particular performance threshold has been exceeded. In one or more embodiments, if the particular user is a high value user as determined by policy information, MINE component 212 may instruct the ABR client to not perform adaptation of the bitrate unless performance does not improve after a predetermined period of time. Conversely, in at least one embodiment, if the particular user is a low value user as determined by policy information, MINE component 212 may instruct the ABR client to start adaptation of the bitrate. In still other embodiments, MSI SDK 1202 may send periodic status notifications to MINE component 212 including adaption attributes indicating the current adaptation state (adaption on/off) and/or an adaption type (codec change, error correction/concealment). In still other embodiments, MINE component 212 may encode on or more packets/frames to indicate to GW 906 which packets/frames may or may not be discarded. For example, in a particular embodiment MINE component 212 may indicate that a packet containing a reference frame should not be dropped while allowing other packets not containing a reference frame to be dropped by GW 906.

In some embodiments, MINE component 212 may utilize other network information such as RAN analytics in addition to performance metrics generated by MSI SDK 1202 to determine with an adaption event should be triggered.

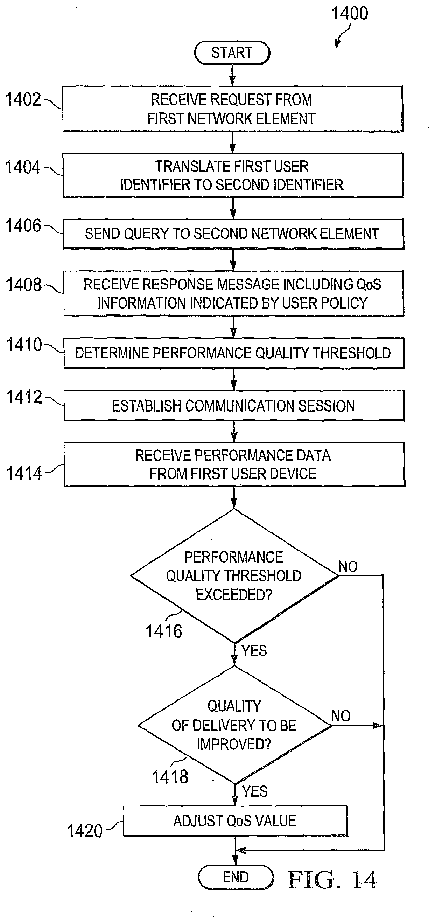

FIGURE 14 is a simplified flowchart 1400 of another embodiment of signaling between a mobile network and an enterprise network. In 1402, MINE component 212 receives a request from a first network element associated with a first network for establishing a first communication session between the first network element to a first user device associated with a second network. In a particular embodiment, the first network element is an application server and the first network is an enterprise network. In a particular embodiment, the first user device is first UE device 902a. In a particular embodiment, the communication session is a media session. The request includes a first user identifier used to identify a user associated with the first user device within the first network. In one or more embodiments, the request includes a request to provide content, such as media content, form the first network element to the first user device.

In 1404, MINE component 212 translates the first user identifier to a second user identifier in which the second user identifier is used to identify the user within the second network. In 1406, MINE component 212 sends a first query including the second user identifier to a second network element. In a particular embodiment, the second network element is a billing system storing one or more user profiles and/or user plans associated with users of one or more user devices within the mobile network. In a particular embodiment, the billing system includes a policy and charging rules function (PCRF). In 1408, MINE component 212 receives a first response message including quality of service information indicated by a user policy associated with the second user identifier. In a particular embodiment, MINE component 212 may further translate the first response message with the second user identifier to a policy query with the first user identifier.

In 1410, MINE component 212 determines one or more performance quality thresholds for the first communication session based upon the quality of service information. In 1412, the first communication session is established between the first network element and the first user device. In 1414, MINE component 212 receives performance data from the first user device including at least one performance metric indicating a quality of delivery of content to the first user device by the first communication session. In a particular embodiment, MINE component 212 has previously subscribed to receive the performance data from the first user device. In one or more embodiments, MINE component 212 may be configured to receive performance data from the first user device on a periodic basis during the communication session.

In 1416, MINE component 212 determines whether the at least one performance metric exceeds the performance quality threshold. If it is determined that the at least one metric has exceeded the performance quality threshold, in 1418 MINE component 212 determines whether the quality of delivery is to be improved for the user. If it is determined that the quality of delivery is to be improved for the user, in 1420 MINE component 212 adjusts a quality-of-service (QoS) value for the communication session. In a particular embodiment, MINE component 212 increases a first quality of service value for the first communication session if it is determined that the quality of delivery is to be improved for the user. In still another particular embodiment, MINE component 212 decreases a second quality of service value for a second session associated with a second user device if it is determined that the quality of delivery is to be improved for the user and the procedure ends. If it is determined in 1416 that the at least one performance quality threshold has not been exceed or if it is determined in 1418 that the quality of delivery is not to be improved for the user, the procedure ends.

In one implementation, server 201 includes software to achieve (or to foster) the operations as outlined herein in this Specification. Note that in one example, each of these elements can have an internal structure (e.g., a processor, a memory element, etc.) to facilitate some of the operations described herein. In other embodiments, the operations may be executed externally to these elements, or included in some other network element to achieve this intended functionality. Alternatively, server 201 may include this software (or reciprocating software) that can coordinate with other network elements in order to achieve the operations, as outlined herein. In still other embodiments, one or several devices may include any suitable algorithms, hardware, software, components, modules, interfaces, or objects that facilitate the operations thereof.

Note that in certain example implementations, the orchestration, work flow coordination, and translation functions outlined herein may be implemented by logic encoded in one or more tangible media (e.g., embedded logic provided in an application specific integrated circuit [ASIC], digital signal processor [DSP] instructions, software [potentially inclusive of object code and source code] to be executed by a processor, or other similar machine, etc.). In some of these instances, a memory element [as shown in FIGURE 8] can store data used for the operations described herein. This includes the memory element being able to store software, logic, code, or processor instructions that are executed to carry out the activities described in this Specification. A processor can execute any type of instructions associated with the data to achieve the operations detailed herein in this Specification. In one example, the processor (as shown in FIGURE 8) could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read only memory (EPROM), an electrically erasable programmable ROM (EEPROM)) or an ASIC that includes digital logic, software, code, electronic instructions, or any suitable combination thereof.

In one example implementation, server 102 may include software in order to achieve the functions outlined herein. These activities can be facilitated by sub-modules of network, service, subscriber abstraction and orchestration module 202 (where sub-modules can be suitably combined in any appropriate manner, which may be based on particular configuration and/or provisioning needs). Server 201 can include memory elements for storing information to be used in achieving the data abstraction activities, as discussed herein. Additionally, server 201 may include a processor that can execute software or an algorithm to perform the operations, as disclosed in this Specification. These devices may further keep information in any suitable memory element (random access memory (RAM), ROM, EPROM, EEPROM, ASIC, etc.), software, hardware, or in any other suitable component, device, element, or object where appropriate and based on particular needs. Any of the memory items discussed herein (e.g., database, tables, trees, cache, etc.) should be construed as being encompassed within the broad term 'memory element.' Similarly, any of the potential processing elements, modules, and machines described in this Specification should be construed as being encompassed within the broad term 'processor.' Each of the network elements can also include suitable interfaces for receiving, transmitting, and/or otherwise communicating data or information in a network environment.

Note that with the example provided above, as well as numerous other examples provided herein, interaction may be described in terms of two, three, or four network elements. However, this has been done for purposes of clarity and example only. In certain cases, it may be easier to describe one or more of the functionalities of a given set of flows by only referencing a limited number of network elements. It should be appreciated that communication systems 100, 200, 900, and 1200 (and their teachings) are readily scalable and can accommodate a large number of components, as well as more complicated/sophisticated arrangements and configurations. Accordingly, the examples provided should not limit or inhibit the broad teachings of communication systems 100 and 200 as potentially applied to a myriad of other architectures.

It is also important to note that the steps in the preceding flow diagrams illustrate only some of the possible signaling scenarios and patterns that may be executed by, or within, communication systems 100, 200, 900, and 1200. Some of these steps may be deleted or removed where appropriate, or these steps may be modified or changed considerably without departing from the scope of the present disclosure as defined in the claims. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by communication systems 100, 200, 900, and 1200 in that any suitable arrangements, chronologies, configurations, and timing mechanisms may be provided without departing from the teachings of the present disclosure.

Although the present disclosure has been described in detail with reference to particular arrangements and configurations, these example configurations and arrangements may be changed significantly without departing from the scope of the present disclosure as defined in the claims. For example, although the present disclosure has been described with reference to particular communication exchanges involving certain endpoint components and certain protocols, communication systems 100, 200, 900, and 1200 may be applicable to other protocols and arrangements. Moreover, the present disclosure is equally applicable to various technologies, aside from mobile architectures, as these have only been offered for purposes of discussion.

Additionally, although communication systems 100, 200, 900, and 1200 have been illustrated with reference to particular elements and operations that facilitate the communication process, these elements and operations may be replaced by any suitable architecture or process that achieves the intended functionality of communication systems 100, 200, 900, and 1200.

## Claims

1. A method, comprising:
receiving (1402) a request from a first network element associated with a first network for establishing a first communication session between the first network element to a first user device associated with a second network, the request including a first user identifier used to identify a first user associated with the first user device within the first network;
translating (1404) the first user identifier to a second user identifier, the second user identifier used to identify the first user within the second network;
sending (1406) a first query including the second user identifier to a second network element associated with the second network; and
receiving (1408) a first response message from the second network element, the first response message including quality of service information indicated by a policy associated with the second user identifier;
determining (1410) a performance quality threshold for the first communication session based upon the quality of service information;
establishing (1412) the first communication session between the first network element and the first user device;
receiving (1414) performance data including at least one performance metric indicating a quality of delivery of content to the first user device by the first communication session; and
determining (1416) whether the at least one performance metric exceeds the performance quality threshold.

2. The method of Claim 1, further comprising translating the first response message with the second user identifier to a policy query with the first user identifier.

3. The method of Claim 1, further comprising determining (1418) whether the quality of delivery is to be improved for the first user, based on a user profile and available resources within the network when it is determined that the at least one performance metric exceeds the performance quality threshold.

4. The method of Claim 3, further comprising increasing (1420) a first quality of service value for the first communication session if it is determined that the quality of delivery is to be improved for the first user.

5. The method of Claim 3, further comprising decreasing (1420) a second quality of service value for a second session associated with a second user device if it is determined that the quality of delivery is to be improved for the first user.

6. The method of Claim 1, wherein the second network is a mobile network.

7. The method of Claim 1, wherein the first network is an enterprise network.

8. The method of Claim 1, wherein the second network element includes a policy and charging rules function, PCRF (910) or the first network element includes an application server (914) for providing one or more applications or services to first user equipment.

9. Logic encoded in one or more non-transitory tangible media or a computer program or computer program product that includes code for execution and when executed by a processor operable to perform operations comprising:
receiving (1402) a request from a first network element associated with a first network for establishing a first communication session between the first network element to a first user device associated with a second network, the request including a first user identifier used to identify a first user associated with the first user device within the first network;
translating (1404) the first user identifier to a second user identifier, the second user identifier used to identify the first user within the second network;
sending (1406) a first query including the second user identifier to a second network element associated with the second network; and
receiving (1408) a first response message including quality of service information indicated by a policy associated with the second user identifier;
determining (1410) a performance quality threshold for the first communication session based upon the quality of service information;
establishing (1412) the first communication session between the first network element and the first user device;
receiving (1414) performance data including at least one performance metric indicating a quality of delivery of content to the first user device by the first communication session; and
determining (1416) whether the at least one performance metric exceeds the performance quality threshold.

10. The media, computer program or computer program product of Claim 9 wherein the operations further comprise operations for implementing the method according to any of Claims 2 to 8.

11. An apparatus, comprising:
a memory element configured to store data,
a processor operable to execute instructions associated with the data, and
at least one module, the at least one module being configured to:
receive (1402) a request from a first network element associated with a first network for establishing a first communication session between the first network element to a first user device associated with a second network, the request including a first user identifier used to identify a first user associated with the first user device within the first network;
translate (1404) the first user identifier to a second user identifier, the second user identifier used to identify the first user within the second network;
send (1406) a first query including the second user identifier to a second network element associated with the second network; and
receive (1408) a first response message including quality of service information indicated by a policy associated with the second user identifier;
determine (1410) a performance quality threshold for the first communication session based upon the quality of service information;
establish (1412) the first communication session between the first network element and the first user device;
receive (1414) performance data including at least one performance metric indicating a quality of delivery of content to the first user device by the first communication session; and
determine (1416) whether the at least one performance metric exceeds the performance quality threshold.

12. The apparatus of Claim 11, wherein the at least one module is further configured to implement the method according to any of Claims 2 to 8.

## Patentansprüche

1. Verfahren, welches Folgendes aufweist:
Empfangen (1402) einer Anforderung von einem ersten Netzwerkelement, das einem ersten Netzwerk zugeordnet ist, zum Einrichten einer ersten Kommunikationssitzung zwischen dem ersten Netzwerkelement und einer ersten Benutzervorrichtung, die einem zweiten Netzwerk zugeordnet ist, wobei die Anforderung eine erste Benutzerkennung enthält, die verwendet wird, um einen ersten Benutzer zu identifizieren, welcher der ersten Benutzervorrichtung innerhalb des ersten Netzwerks zugeordnet ist;
Umwandeln (1404) der ersten Benutzerkennung in eine zweite Benutzerkennung, wobei die zweite Benutzerkennung verwendet wird, um den ersten Benutzer innerhalb des zweiten Netzwerks zu identifizieren;
Senden (1406) einer ersten Abfrage, welche die zweite Benutzerkennung enthält, an ein zweites Netzwerkelement, das dem zweiten Netzwerk zugeordnet ist; und
Empfangen (1408) einer ersten Antwortnachricht von dem zweiten Netzwerkelement, wobei die erste Antwortnachricht Dienstqualitätsinformationen enthält, die durch eine Richtlinie angezeigt werden, die der zweiten Benutzerkennung zugeordnet ist;
Bestimmen (1410) eines Leistungsqualitätsschwellenwerts für die erste Kommunikationssitzung basierend auf den Dienstqualitätsinformationen;
Einrichten (1412) der ersten Kommunikationssitzung zwischen dem ersten Netzwerkelement und der ersten Benutzervorrichtung;
Empfangen (1414) von Leistungsdaten, die mindestens eine Leistungsmetrik enthalten, die eine Qualität der Bereitstellung von Inhalten an die erste Benutzervorrichtung durch die erste Kommunikationssitzung anzeigt; und
Bestimmen (1416), ob die mindestens eine Leistungsmetrik den Leistungsqualitätsschwellenwert überschreitet.

2. Verfahren nach Anspruch 1, das ferner das Umwandeln der ersten Antwortnachricht mit der zweiten Benutzerkennung in eine Richtlinienabfrage mit der ersten Benutzerkennung aufweist.

3. Verfahren nach Anspruch 1, das ferner das Bestimmen (1418), ob die Qualität der Bereitstellung für den ersten Benutzer verbessert werden muss, basierend auf einem Benutzerprofil und verfügbaren Ressourcen innerhalb des Netzwerks, wenn bestimmt wird, dass die mindestens eine Leistungsmetrik den Leistungsqualitätsschwellenwert überschreitet, aufweist.

4. Verfahren nach Anspruch 3, das ferner das Erhöhen (1420) eines ersten Dienstqualitätswerts für die erste Kommunikationssitzung aufweist, wenn bestimmt wird, dass die Qualität der Bereitstellung für den ersten Benutzer verbessert werden muss.

5. Verfahren nach Anspruch 3, das ferner das Verringern (1420) eines zweiten Dienstqualitätswerts für eine zweite Sitzung aufweist, die einem zweiten Benutzergerät zugeordnet ist, wenn bestimmt wird, dass die Qualität der Bereitstellung für den ersten Benutzer verbessert werden muss.

6. Verfahren nach Anspruch 1, wobei das zweite Netzwerk ein mobiles Netzwerk ist.

7. Verfahren nach Anspruch 1, wobei das erste Netzwerk ein Unternehmensnetzwerk ist.

8. Verfahren nach Anspruch 1, wobei das zweite Netzwerkelement eine Policy and Charging Rules Function, PCRF (910) enthält oder das erste Netzwerkelement einen Anwendungsserver (914) aufweist, um der ersten Benutzervorrichtung eine oder mehrere Anwendungen oder Dienste bereitzustellen.

9. Logik, die in einem oder mehreren nicht-transitorischen greifbaren Medien oder einem Computerprogramm oder Computerprogrammprodukt codiert ist, die einen Code zur Ausführung enthält und die, wenn sie durch einen Prozessor ausgeführt wird, der zum Durchführen von Vorgängen betreibbar ist, Folgendes aufweist:
Empfangen (1402) einer Anforderung von einem ersten Netzwerkelement, das einem ersten Netzwerk zugeordnet ist, zum Einrichten einer ersten Kommunikationssitzung zwischen dem ersten Netzwerkelement und einer ersten Benutzervorrichtung, die einem zweiten Netzwerk zugeordnet ist, wobei die Anforderung eine erste Benutzerkennung enthält, die verwendet wird, um einen ersten Benutzer zu identifizieren, welcher der ersten Benutzervorrichtung innerhalb des ersten Netzwerks zugeordnet ist;
Umwandeln (1404) der ersten Benutzerkennung in eine zweite Benutzerkennung, wobei die zweite Benutzerkennung verwendet wird, um den ersten Benutzer innerhalb des zweiten Netzwerks zu identifizieren;
Senden (1406) einer ersten Abfrage, welche die zweite Benutzerkennung enthält, an ein zweites Netzwerkelement, das dem zweiten Netzwerk zugeordnet ist; und
Empfangen (1408) einer ersten Antwortnachricht, die Dienstqualitätsinformationen enthält, die durch eine Richtlinie angezeigt werden, die der zweiten Benutzerkennung zugeordnet ist;
Bestimmen (1410) eines Leistungsqualitätsschwellenwerts für die erste Kommunikationssitzung basierend auf den Dienstqualitätsinformationen;
Einrichten (1412) der ersten Kommunikationssitzung zwischen dem ersten Netzwerkelement und der ersten Benutzervorrichtung;
Empfangen (1414) von Leistungsdaten, die mindestens eine Leistungsmetrik enthalten, die eine Qualität der Bereitstellung von Inhalten an die erste Benutzervorrichtung durch die erste Kommunikationssitzung anzeigt; und
Bestimmen (1416), ob die mindestens eine Leistungsmetrik den Leistungsqualitätsschwellenwert überschreitet.

10. Medien, Computerprogramm oder Computerprogrammprodukt nach Anspruch 9, wobei die Vorgänge ferner Vorgänge zum Implementieren des Verfahrens nach einem der Ansprüche 2 bis 8 aufweisen.

11. Vorrichtung, die Folgendes aufweist:
ein Speicherelement, das zum Speichern von Daten konfiguriert ist,
einen Prozessor, der zum Ausführen von den Daten zugeordneten Anweisungen betreibbar ist, und
mindestens ein Modul, wobei das mindestens eine Modul zu Folgendem konfiguriert ist:
Empfangen (1402) einer Anforderung von einem ersten Netzwerkelement, das einem ersten Netzwerk zugeordnet ist, zum Einrichten einer ersten Kommunikationssitzung zwischen dem ersten Netzwerkelement und einer ersten Benutzervorrichtung, die einem zweiten Netzwerk zugeordnet ist, wobei die Anforderung eine erste Benutzerkennung enthält, die verwendet wird, um einen ersten Benutzer zu identifizieren, welcher der ersten Benutzervorrichtung innerhalb des ersten Netzwerks zugeordnet ist;
Umwandeln (1404) der ersten Benutzerkennung in eine zweite Benutzerkennung, wobei die zweite Benutzerkennung verwendet wird, um den ersten Benutzer innerhalb des zweiten Netzwerks zu identifizieren;
Senden (1406) einer ersten Abfrage, welche die zweite Benutzerkennung enthält, an ein zweites Netzwerkelement, das dem zweiten Netzwerk zugeordnet ist; und
Empfangen (1408) einer ersten Antwortnachricht, die Dienstqualitätsinformationen enthält, die durch eine Richtlinie angezeigt werden, die der zweiten Benutzerkennung zugeordnet ist;
Bestimmen (1410) eines Leistungsqualitätsschwellenwerts für die erste Kommunikationssitzung basierend auf den Dienstqualitätsinformationen;
Einrichten (1412) der ersten Kommunikationssitzung zwischen dem ersten Netzwerkelement und der ersten Benutzervorrichtung;
Empfangen (1414) von Leistungsdaten, die mindestens eine Leistungsmetrik enthalten, die eine Bereitstellungsqualität von Inhalten an die erste Benutzervorrichtung durch die erste Kommunikationssitzung anzeigt; und
Bestimmen (1416), ob die mindestens eine Leistungsmetrik den Leistungsqualitätsschwellenwert überschreitet.

12. Vorrichtung nach Anspruch 11, wobei das mindestens eine Modul ferner konfiguriert ist, das Verfahren nach einem der Ansprüche 2 bis 8 zu implementieren.

## Revendications

1. Procédé comprenant les étapes suivantes :
recevoir (1402) une requête d'un premier élément de réseau associé à un premier réseau pour établir une première session de communication entre le premier élément de réseau et un premier dispositif utilisateur associé à un deuxième réseau, la requête comprenant un premier identifiant d'utilisateur utilisé pour identifier un premier un utilisateur associé au premier dispositif utilisateur dans le premier réseau ;
convertir (1404) le premier identifiant d'utilisateur en un deuxième identifiant d'utilisateur, le deuxième identifiant d'utilisateur étant utilisé pour identifier le premier utilisateur dans le deuxième réseau ;
envoyer (1406) une première interrogation comprenant le deuxième identifiant d'utilisateur à un deuxième élément de réseau associé au deuxième réseau ; et
recevoir (1408) un premier message de réponse du deuxième élément de réseau, le premier message de réponse comprenant des informations de qualité de service indiquées par une politique associée au deuxième identifiant d'utilisateur ;
déterminer (1410) un seuil de qualité de performance pour la première session de communication sur la base des informations de qualité de service ;
établir (1412) la première session de communication entre le premier élément de réseau et le premier dispositif d'utilisateur ;
recevoir (1414) des données de performance comprenant au moins une mesure de performance indiquant une qualité de fourniture de contenu au premier dispositif d'utilisateur par la première session de communication ; et
déterminer (1416) si l'au moins une mesure de performance dépasse le seuil de qualité de performance.

2. Procédé selon la revendication 1, comprenant en outre la conversion du premier message de réponse ayant le deuxième identifiant d'utilisateur en une interrogation de politique ayant le premier identifiant d'utilisateur.

3. Procédé selon la revendication 1, comprenant en outre la détermination (1418) que la qualité de fourniture doit être améliorée pour le premier utilisateur, sur la base d'un profil utilisateur et de ressources disponibles dans le réseau lorsqu'il est déterminé que l'au moins une mesure de performance dépasse le seuil de qualité de performance.

4. Procédé selon la revendication 3, comprenant en outre l'augmentation (1420) d'une première valeur de qualité de service pour la première session de communication s'il est déterminé que la qualité de fourniture doit être améliorée pour le premier utilisateur.

5. Procédé selon la revendication 3, comprenant en outre la diminution (1420) d'une deuxième valeur de qualité de service pour une deuxième session associée à un deuxième dispositif utilisateur s'il est déterminé que la qualité de fourniture doit être améliorée pour le premier utilisateur.

6. Procédé selon la revendication 1, dans lequel le deuxième réseau est un réseau de téléphonie mobile.

7. Procédé selon la revendication 1, dans lequel le premier réseau est un réseau d'entreprises.

8. Procédé selon la revendication 1, dans lequel le deuxième élément de réseau comprend une fonction de règles de politique et de chargement PCRF (910) ou le premier élément de réseau comprend un serveur d'application (914) destiné à fournir au moins une application ou un service au premier équipement utilisateur.

9. Logique codée dans au moins un support tangible non transitoire ou un logiciel ou un progiciel qui comprend un code d'exécution et, lorsqu'il est exécuté par un processeur, qui est opérant pour effectuer des opérations comprenant :
la réception (1402) d'une requête d'un premier élément de réseau associé à un premier réseau pour établir une première session de communication entre le premier élément de réseau et un premier dispositif utilisateur associé à un deuxième réseau, la requête comprenant un premier identifiant d'utilisateur utilisé pour identifier un premier utilisateur associé au premier dispositif utilisateur dans le premier réseau ;
la conversion (1404) du premier identifiant d'utilisateur en un deuxième identifiant d'utilisateur, le deuxième identifiant d'utilisateur étant utilisé pour identifier le premier utilisateur dans le deuxième réseau ;
l'envoi (1406) d'une première interrogation comprenant le deuxième identifiant d'utilisateur à un deuxième élément de réseau associé au deuxième réseau ; et
la réception (1408) d'un premier message de réponse comprenant des informations de qualité de service indiquées par une politique associée au deuxième identifiant d'utilisateur ;
la détermination (1410) d'un seuil de qualité de performance pour la première session de communication sur la base des informations de qualité de service ;
l'établissement (1412) de la première session de communication entre le premier élément de réseau et le premier dispositif utilisateur ;
la réception (1414) de données de performance comprenant au moins une mesure de performance indiquant une qualité de fourniture de contenu au premier dispositif utilisateur par la première session de communication ; et
la détermination (1416) que l'au moins une mesure de performance dépasse le seuil de qualité de performance.

10. Support, logiciel ou progiciel selon la revendication 9, dans lequel les opérations comprennent en outre des opérations de mise en oeuvre du procédé selon l'une quelconque des revendications 2 à 8.

11. Un appareil comprenant :
un élément de mémoire conçu pour mémoriser des données,
un processeur opérant pour exécuter des instructions associées aux données, et
au moins un module, l'au moins un module étant conçu pour :
recevoir (1402) une requête d'un premier élément de réseau associé à un premier réseau pour établir une première session de communication entre le premier élément de réseau et un premier dispositif utilisateur associé à un deuxième réseau, la requête comprenant un premier identifiant d'utilisateur utilisé pour identifier un premier utilisateur associé au premier dispositif utilisateur dans le premier réseau ;
convertir (1404) le premier identifiant d'utilisateur en un deuxième identifiant d'utilisateur, le deuxième identifiant d'utilisateur étant utilisé pour identifier le premier utilisateur dans le deuxième réseau ;
envoyer (1406) une première interrogation comprenant le deuxième identifiant d'utilisateur à un deuxième élément de réseau associé au deuxième réseau ; et
recevoir (1408) un premier message de réponse incluant des informations de qualité de service indiquées par une politique associée au deuxième identifiant d'utilisateur ;
déterminer (1410) un seuil de qualité de performance pour la première session de communication sur la base des informations de qualité de service ;
établir (1412) la première session de communication entre le premier élément de réseau et le premier dispositif utilisateur ;
recevoir (1414) des données de performance comprenant au moins une mesure de performance indiquant une qualité de fourniture de contenu au premier dispositif utilisateur par la première session de communication ; et
déterminer (1416) si l'au moins une mesure de performance dépasse le seuil de qualité de performance.

12. Appareil selon la revendication 11, dans lequel l'au moins un module est en outre conçu pour mettre en oeuvre le procédé selon l'une quelconque des revendications 2 à 8.
